# EUROPEAN PATENT SPECIFICATION

(11) **EP 3 577 171 B1**
(45) Date of publication and mention of the grant of the patent: **18.11.2020**
(21) Application number: 18706084.3
(22) Date of filing: 06.02.2018
(51) Int. Cl.: C09D 5/00

(54) **AQUEOUS SYSTEM FOR FORMING A COATING ON A SUBSTRATE**
WÄSSRIGES SYSTEM ZUR BILDUNG EINER BESCHICHTUNG AUF EINEM SUBSTRAT
SYSTÈME AQUEUX SERVANT À FORMER UN REVÊTEMENT SUR UN SUBSTRAT

(30) Priority: 06.02.2017 US 201762455106 P
(43) Date of publication of application: 11.12.2019
(73) Proprietor: BASF SE, 67056 Ludwigshafen am Rhein (DE)
(72) Inventor: KUMAR, Rajesh, Riverview MI 48193 (US); LEBEDINKSI, Nikolay, West Bloomfield MI 48322 (US); GRANDHEE, Sunitha, Novi MI 48372 (US)
(74) Representative: BASF IP Association
(86) International application number: PCT/US2018/016999
(87) International publication number: WO 2018/145066

(56) References cited:
- EP-A1- 1 162 237
- EP-B1- 2 598 555
- WO-A1-2010/078232

## Description

### FIELD OF THE DISCLOSURE

This disclosure generally relates to an aqueous system for forming a coating on a substrate. More specifically, the aqueous system includes a particular polycarbodiimide, a reactive compound having at least two reactive groups that react with the polycarbodiimide, and water.

### BACKGROUND

Carbodiimides are widely used condensation reagents in the areas of peptide and organic synthesis to convert carboxylic acids to other more useful groups such as amides and esters. A rapid reaction between carbodiimides and carboxylic acids also enables carbodiimides to serve as acid scavengers and hydrolysis stabilizers for ester based polymers. Carbodiimides have found many uses in industry. However, aromatic carbodiimides, in particular, have not found a suitable application in coatings. Therefore, there remains an opportunity for improvement and advancement. EP1162237 A1 discloses a coating composition for e.g. wear-resistant traffic markings, comprising polycarbodiimde having at least two carbodiimide groups, an aqueous emulsion polymer and an alkoxysilane. EP2598555 B1 discloses the preparation of multifunctional polycarbodiimides to be used as cross-linking agents comprising the reaction of a mono- and/or polyisocyanate, and terminating and/or chain extending the isocyanate functional polycarbodiimde chain. The invention further relates to a coating mixture comprising the polycarbodiimde as crosslinking agent and a polymer dispersed in water, which polymer contains carboxylic acid functions and which may contain a solvent. Suitable substrate is inter alia metal. WO2010/078232 A1 discloses an aqueous coating composition used for coating, e.g. automotive body, comprising a polymer dissolved or dispersed in water, polytrimethylene ether diol, crosslinking agent, and water. For vehicle coating, the aqueous coating composition can be used both for automotive original equipment manufacturing (OEM) coating and for repairing or refinishing coatings of automotive body or an automotive body part.

### SUMMARY OF THE DISCLOSURE

This disclosure provides an aqueous system for forming a coating on a substrate. The aqueous system includes a polycarbodiimide having the structure as defined in the claims. In this structure, each of R¹ and R² is independently chosen from 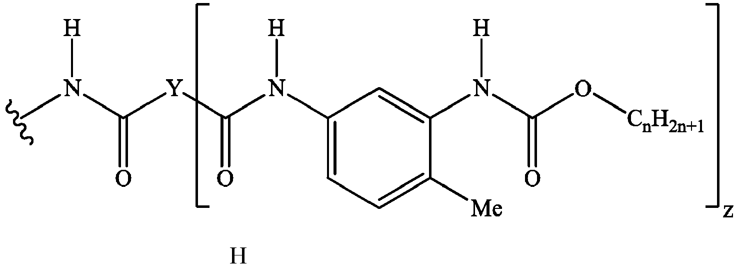 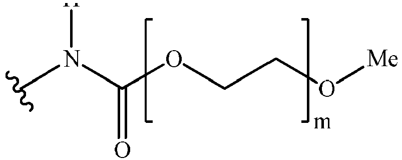 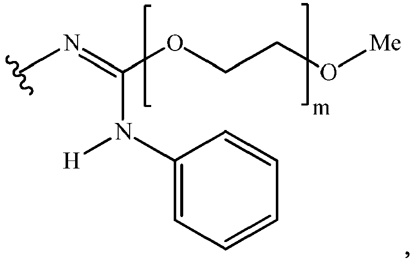 and 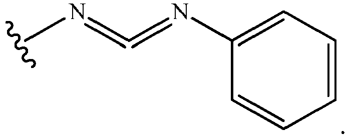 Moreover, in these structures, each n is independently a number from 1 to 20, each m is independently a number from 1 to 100, each Y is independently an alkoxy or polyalkoxy group having (w) oxygen atoms, wherein each w is independently at least 1 and each z is independently a number from 0 to (w-1). In addition, x, Y, and a total of said CₙH₂ₙ₊₁ groups are present in a ratio of from (4 to 5):(0 to 1.5):(0 to 4.5), respectively. The aqueous system also includes a reactive compound having at least two reactive groups that react with the polycarbodiimide. Each reactive group is independently chosen from -OH, -NHR³, -NH₂, - COOH, and -SH, or a combination thereof, wherein R³ is an alkyl group or aromatic group having 1 to 20 carbon atoms. The aqueous system also includes water.

### BRIEF DESCRIPTION OF THE DRAWINGS

Other advantages of the present disclosure will be readily appreciated, as the same becomes better understood by reference to the following detailed description when considered in connection with the accompanying drawings wherein:
Figure 1A is a bar graph showing particle size of the aqueous dispersion of the Examples before polyol addition;
Figure 1B is a bar graph showing particle size of the aqueous dispersion of the Examples after polyol addition; and
Figure 2 is an FT-IR spectra of the aqueous dispersion of the Examples both before and after 9 days of ageing at room temperature.

### DETAILED DESCRIPTION OF THE DISCLOSURE

This disclosure provides an aqueous system (herein also described as the "system") for forming a coating on a substrate and the coating itself. The system may be alternatively described as water-borne such that the coating may be described as an aqueous coating. The terminology "water-borne" typically describes that the system includes less than or equal to 10, 9, 8, 7, 6, 5 4, 3, 2, 1, 0.5, or 0.1, weight percent of a solvent based on a total weight of the system. In one embodiment, the system is entirely free of solvent. In other words, typically the water is used almost exclusively in place of the solvent. However, some residual solvent may be present, e.g. up to about 10 weight percent. The water itself is typically present in the system in an amount of from 1 to 99, 5 to 95, 10 to 95, 10 to 50, 15 to 90, 20 to 85, 25 to 80, 30 to 75, 35 to 70, 40 to 65, 45 to 60, 50 to 55, or 55 to 60, parts by weight per 100 parts by weight of the system. In other words, the system typically has a solids content of (100 minus the weight percent of the water). In additional non-limiting embodiments, all values and ranges of values between the aforementioned values are hereby expressly contemplated.

The solvent described above that is minimized or eliminated is typically an organic solvent. For example, the organic solvent may be polar or non-polar. In various embodiments, the organic solvent is chosen from dimethoxyether, tetrahydrofuran, butylacetate, xylene, methyl ethyl ketone, methyoxypropylacetate, acetone, and combinations thereof.

In other embodiments, the organic solvent is chosen from alcohols, dimethoxyether, tetrahydrofuran, butylacetate, aliphatic- and aromatic hydrocarbons, methyl ethyl ketone, methyoxypropylacetate, 1-chloro-4 (trifluoromethyl)benzene, acetone, and combinations thereof. In other embodiments, the organic solvent is chosen from alcohols, ethers, ketones, acetates, and combinations thereof. In further embodiments, the organic solvent is chosen from alcohols, glycols, halogenated and/or non-halogenated aliphatic- and aromatic hydrocarbons, esters, ketones, ethers and combinations thereof.

The system may be used in a variety of applications including, but not limited to, original equipment manufacturing (OEM) "finish" coatings, aftermarket "refinish" coatings, automotive coatings, protective coatings, films, wood coatings, coating for plastics, inks, wood binder adhesives, encapsulants, gels, sealants, release coatings, conformal coatings, and combinations thereof. Most typically, the system is used as an automotive OEM finish coating or as an automotive refinish coating as a primer. These coatings may be described as aqueous coatings and each is expressly contemplated as options herein.

In various other embodiments, the system is used as a dispersion and/or for OEM and large vehicle finishes, inks, wood, metal and plastics coatings, construction applications, as well as coatings of textiles, glass and paper. In addition, waterborne systems have potential to be used in non-conventional coatings applications such as cosmetics and medical technology. Still further, the system may be used to form primer coats, mid-coats, basecoats, and topcoats on a variety of metal substrates.

### Polycarbodiimide:

The system includes a polycarbodiimide that has the structure: 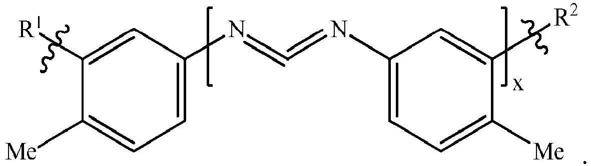 In this structure, each of R¹ and R² is independently chosen from: 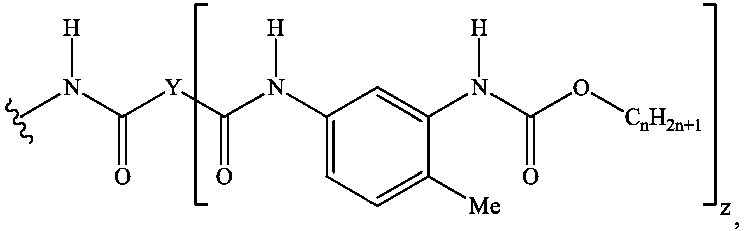 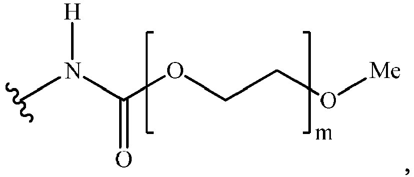 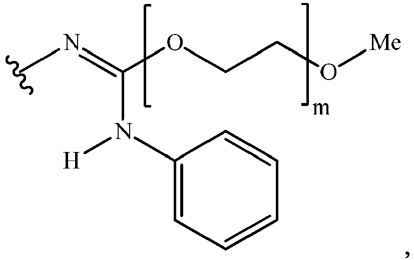 and 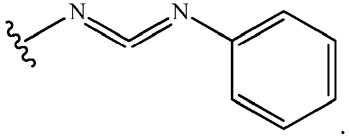 In various embodiments, the polycarbodiimide has the structure: 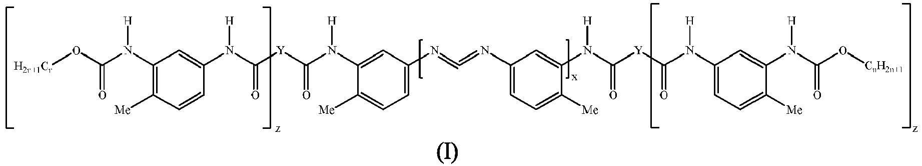 or 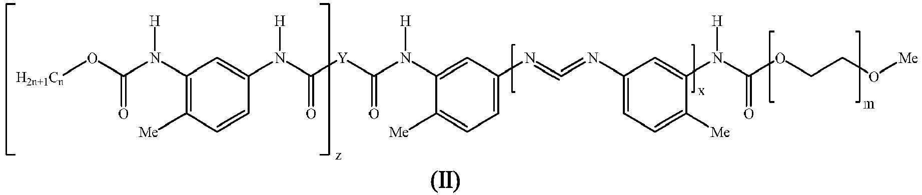 or 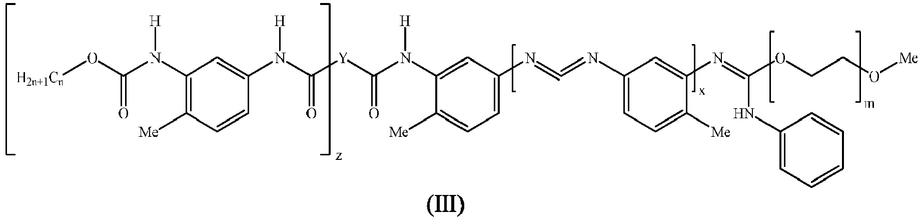 or 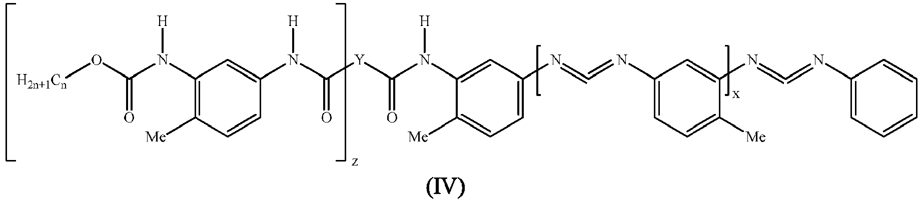 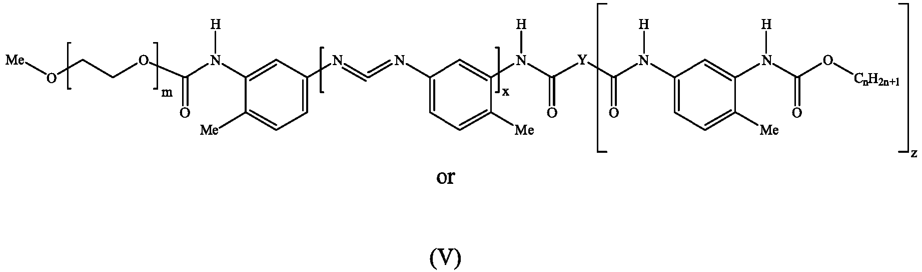 or 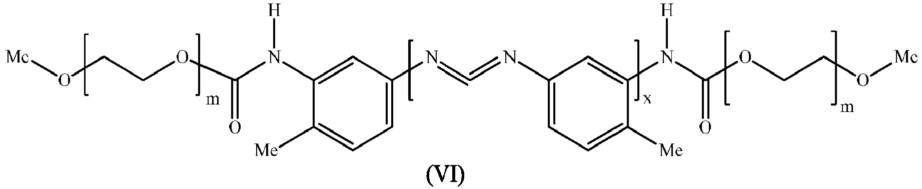 or 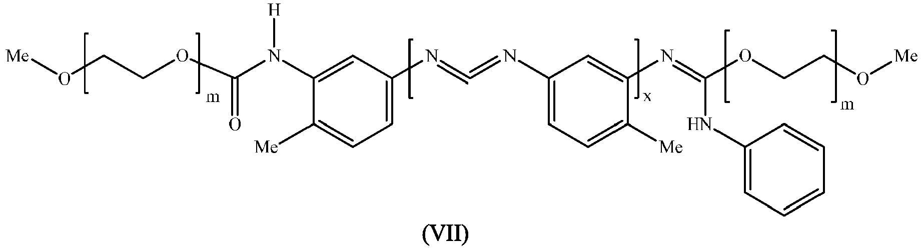 or 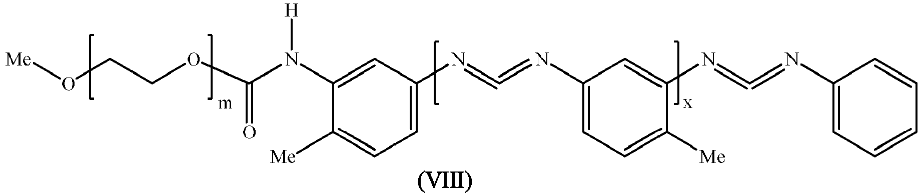 or 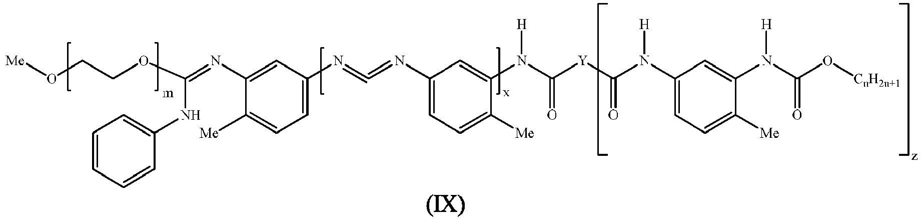 or 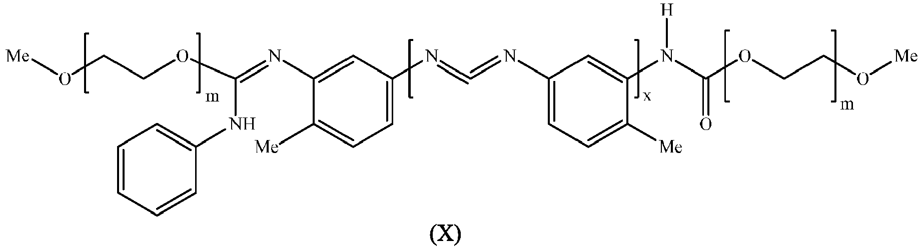 or 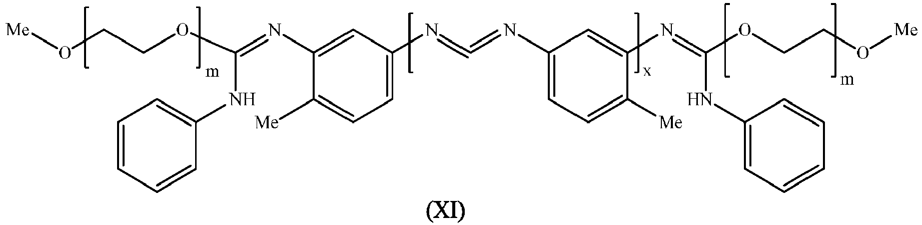 or 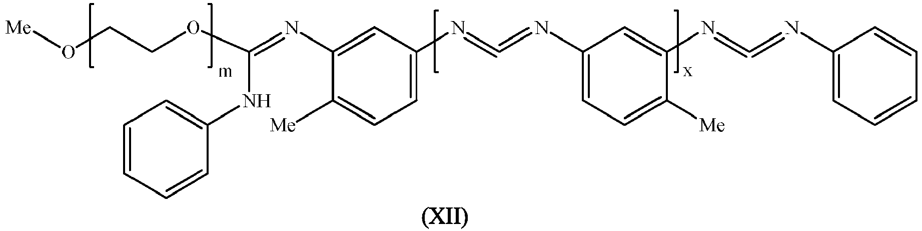 or 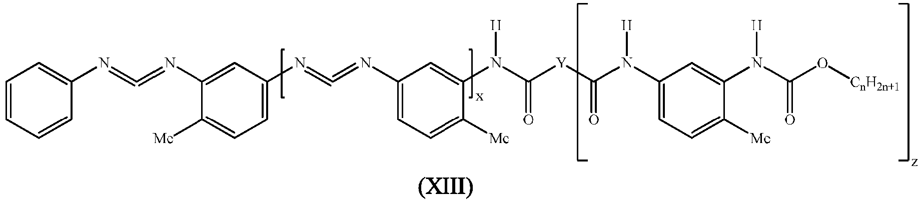 or 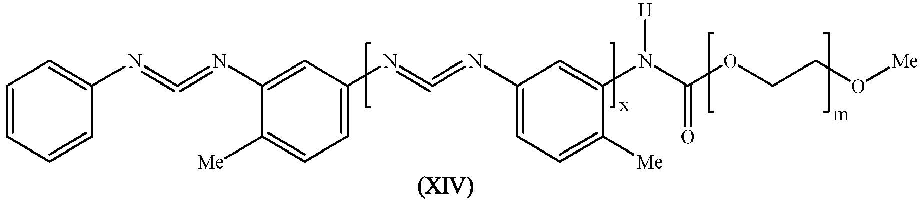 or 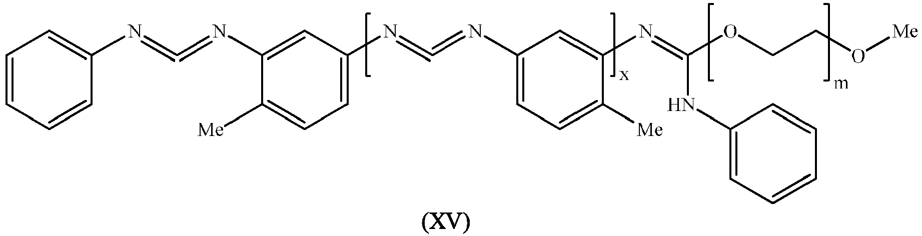 or 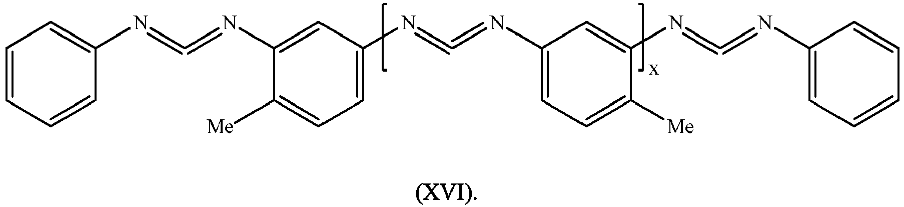 Moreover, in these structures, each n is independently a number from 1 to 20, e.g. 1, 2, 3, 4, 5, 6, 7, 8, 9, 10, 11, 12, 13, 14, 15, 16, 17, 18, 19, or 20, or any value or ranges of values therebetween. Moreover, each m is independently a number from 1 to 100, e.g. 5 to 95, 10 to 90, 15 to 85, 20 to 80, 25 to 75, 30 to 70, 35 to 65, 40 to 60, 45 to 55, or 50 to 55, or any value or range of values therebetween.

It is contemplated that one or more polycarbodiimides may be utilized. If more than one is utilized, the additional polycarbodiimides may have a structure as is shown above or may have a different structure, e.g. any polycarbodiimide known in the art. In various embodiments, two, three, or four polycarbodiimides are used.

In addition, each Y is independently an alkoxy or polyalkoxy group having (w) oxygen atoms, wherein each w is independently at least 1 and each z is independently a number from 0 to (w-1). In various embodiments, each w is independently 1, 2, or 3. However, it is contemplated that each w may independently be greater than 3, e.g. 4, 5, 6, 7, or 8. The terminology "alkoxy" typically describes a group having an alkyl moiety singly bonded to an oxygen atom, which in turn is typically bonded to a hydrogen atom, e.g. alkyl-O-H. The terminology "polyalkoxy" group typically describes two or more alkoxy groups bonded together.

In alternative embodiments, each Y is independently derived from a tri-hydroxy functional polyol having a hydroxyl number from 1500 to 2000, from 1550 to 1950, from 1600 to 1900, from 1650 to 1850, from 1700 to 1800, from 1700 to 1750, or from 1750 to 1800, mg KOH/g. In various embodiments, each Y is independently derived from a tri-hydroxy functional polyol having a hydroxyl number from 800 to 1200, 850 to 1150, 900 to 1100, 950 to 1050, 950 to 1000, or 1000 to 1050, mg KOH/g. In other embodiments, each Y is independently derived from a tri-hydroxy functional polyol having a hydroxyl number from 200 to 400, from 250 to 350, from 250 to 300, or from 300 to 350, mg KOH/g. In other embodiments, each Y is independently derived from a tri-hydroxy functional polyol having a hydroxyl number from 20 to 400, from 30 to 390, from 40 to 380, from 50 to 370, from 60 to 360, from 70 to 350, from 80 to 340, from 90 to 330, from 100 to 320, from 110 to 310, from 120 to 300, from 130 to 290, from 140 to 280, from 150 to 270, from 160 to 260, from 170 to 250, from 180 to 240, from 190 to 230, from 200 to 220, from 200 to 210, or from 210 to 220, mg KOH/g. In other embodiments, each Y is independently derived from glycerine and/or trimethylolpropane. In further embodiments, each Y is independently derived from propylene glycol, ethylene glycol, butylene glycol, copolymers thereof, and combinations thereof. Alternatively, each Y may be independently derived from a diol. Further, each Y may be independently derived from a monol, e.g. 1-decanol, 2-propyl-1-heptanol, or 2-ethylhexanol, or a combination thereof. Alternatively, each Y may be described as being independently derived from a polyester polymer. The monols, diols, and polyols used may be chosen from those set forth in the instant Examples below, e.g. glycerine, Pluracol 858, Pluracol GP 430, and Pluracol GP 730, and combinations thereof. In further embodiments, each Y may be described as being independently derived from a polyol that is 4, 5, 6, 7, or 8, hydroxy-functional or a combination thereof. In still other embodiments, each Y may independently be any described above. For example, if the polycarbodiimide has two Y groups, then they may be the same or different from each other. In one embodiment, Y is or is derived from trimethylolpropane.

In addition, x, Y, and a total of said CₙH₂ₙ₊₁ groups are present in a ratio of from (4 to 5):(0 to 1.5):(0 to 4.5), respectively. In various embodiments, x, Y, and a total of the CₙH₂ₙ₊₁ groups are present in a ratio of from (4 to 5):(0.5 to 1.5):(2.5 to 4.5), respectively. In further embodiments, the first value of from (4 to 5) may be further defined as from 4.1 to 4.9, from 4.2 to 4.8, from 4.3 to 4.7, from 4.4 to 4.6, from 4.4 to 4.5, or from 4.5 to 4.6, or any other range thereof. In other embodiments, the second value of from (0 to 1.5) may be further defined as 0.5 to 1.5, 0.6 to 1.4, 0.7 to 1.3, 0.8 to 1.2, 0.9 to 1.1, 0.9 to 1, or 1 to 1.1, or any other range thereof. In further embodiments, the third value of from (0 to 4.5) may be further defined as 0.1 to 4.5, 0.2 to 4.4, 0.3 to 4.3, 0.4 to 4.2, 0.5 to 4.1, 0.6 to 4, 0.7 to 3.9, 0.8 to 3.8, 0.9 to 3.7, 1 to 3.6, 1.1 to 3.5, 1.2 to 3.4, 1.3 to 3.3, 1.4 to 3.2, 1.5 to 3.1, 1.6 to 3, 1.7 to 2.9, 1.8 to 2.8, 1.9 to 2.7, 2 to 2.6, 2.1 to 2.5, 2.2 to 2.4, 2.3 to 2.4, 2.5 to 4.4, 2.6 to 4.4, 2.7 to 4.3, 2.8 to 4.2, 2.9 to 4.1, 3 to 4, 3.1 to 3.9, 3.2 to 3.8, 3.3 to 3.7, 3.4 to 3.6, 3.4 to 3.5, or 3.5 to 3.6. In various non-limiting embodiments, all values and ranges of values between and including the aforementioned values are hereby expressly contemplated.

The polycarbodiimide is typically present in an amount of from 5 to 80, 10 to 75, 15 to 70, 20 to 65, 25 to 60, 30 to 55, 35 to 50, 40 to 45, or 45 to 50, parts by weight per 100 parts by weight of the system. In additional non-limiting embodiments, all values and ranges of values between the aforementioned values are hereby expressly contemplated.

### Reactive Compound:

The system also includes a reactive compound having at least two reactive groups that react with the polycarbodiimide. Each reactive group is independently chosen from -OH, - NHR³, -NH₂, -COOH, and -SH, and combinations thereof, wherein R³ is an alkyl group or aromatic group having 1 to 20 carbon atoms. The reactive compound has at least two reactive groups to allow for growth of a polymer to form the coating. For example, if a reactive compound with only a single reactive group was utilized, the reactive compound would act as a chain stopper. However, it is contemplated that such a chain stopper may be utilized as an additive to control chain length and polymer growth. However, if such a chain stopper is used, it may or may not be different from the aforementioned reactive compound. Depending on choice of reactive group, reaction may require a catalyst (e.g. amine and/or organometallic or both) and heat, or both.

In various embodiments, the reactive compound includes 2, 3, 4, 5, or more reactive groups. Each one of the reactive groups may be chosen from -OH, -NHR³, -NH₂, -COOH, and -SH, and combinations thereof. Therefore, all of the reactive groups of the reactive compound may be the same or they may be different from one another. Mixtures of the aforementioned reactive groups may be used. If the reactive compound includes at least one - OH group, the -OH group may react with the polycarbodiimide to form a poly-isourea. If the reactive compound includes at least one -NHR³ group, the -NHR³ group may react with the polycarbodiimide to form a polyguanidine. If the reactive compound includes at least one - NH₂ group, the -NH₂ group may react with the polycarbodiimide to form a polyguanidine. If the reactive compound includes at least one -COOH group, the -COOH group may react with the polycarbodiimide to form a poly-n-acylurea. If the reactive compound includes at least one -SH group, the -SH group may react with the polycarbodiimide to form a poly-isothiourea. If the reactive compounds include more than 1 of one or more of the aforementioned groups, then each one of the reactive groups may react with the polycarbodiimide to form various isourea, n-acyl urea, guanidine, or isothiourea, linkages, even if the reaction product of the polycarbodiimide and the reactive compound, as a whole, is not classified as a poly-isourea, polyguanidine, poly-n-acylurea, or poly-isothiourea. In various embodiments, the commercial products, as follows, could be used: COOH (Croda products, SMA, Joncryl, saturated and unsaturated polyesters); OH (Pluracol, Joncryl polyols); NH/NH2 (Jeffimines); SH (Thiokols/Thioplast), and combinations thereof.

In various embodiments, the index range of NCN/EH of the system is from 50 to 500, 50 to 450, 100 to 400, 150 to 350, 200 to 300, 250 to 300, 50 to 150, 55 to 145, 60 to 140, 65 to 135, 70 to 130, 75 to 125, 80 to 120, 85 to 115, 90 to 110, 95 to 105, or 95 to 100. In various non-limiting embodiments, all values and ranges of values between and including the aforementioned values are hereby expressly contemplated.

In various embodiments, calculations of how much of each component to use are based on index, e.g. 100 +-50, as is known in the art. For example, the equivalent weight of reactive components and the equivalent weight of polycarbodiimide can be used to determine amount of reactive components to react with the polycarbodiimide at an index of 100, e.g. 1:1 equivalence. Other components such water, surfactant, etc. may, in some embodiments, be generally considered non-reactive additives. However, if they are present in large enough concentrations with high reactive function (e.g. hydroxyl #), then they may be included with a resin hydroxyl number to determine amount to use, as would be understood by those of skill in the art.

### Water:

The aqueous system also includes water. The water may be of any type and purity, e.g. tap water, well water, purified water, distilled water, etc. In various embodiments, the system includes the water in an amount as first described above.

### Additives:

The system may also include one or more additives. In various embodiments, the additives may include a pigment, an inorganic filler, flow modifiers, non-ionic, cationic, anionic surfactants, dispersants, organometal based tin/bismuth catalysts, metal carboxylate etc. and/or amines, polyurethane catalysts known in the art, combinations thereof, etc.

The pigment is not particularly limited and may be any known in the art. For example, the pigment may be titanium dioxide (TiO₂), iron oxide, bismuth vanidate, isoindoline, benzimidazolone, perinone, naphtol, quinacridone, DPP, perylene, copper phthalocyanine, or combinations thereof. In various embodiments, the pigment is chosen from one or more of the following product lines, each of which is commercially available from BASF Corporation, Firemist®, Glacier™, Lumina®, Lumina® Royal, Mearlin®, Metasheen®, Paliocrom®, Paliocrom® Brilliant, Cinquasia®, Cromophtal®, Irgazin®, Heliogen®, Paliogen®, Paliotan®, Paliotol®, Sicopal®, Sicotan®, Sicotrans®, or combinations thereof. The pigment may be present in the composition in any amount chosen by one of skill in the art. In various embodiments, the pigment is present in an amount of from 1 to 20, from 5 to 20, from 5 to 10, from 10 to 20, from 10 to 15, or from 15 to 20, parts by weight per 100 parts by weight of the system.

The additive may also include an inorganic filler. The inorganic filler is typically chosen from calcium carbonate, barium sulfate, magnesium silicate, bentonite, wollastonite, talc, and combinations thereof. The inorganic filler may be present in the composition in any amount chosen by one of skill in the art. In still other embodiments the inorganic filler is a combination of barium sulfate, calcium carbonate, talc, and bentonite clay.

In various embodiments, the inorganic filler is present in an amount of from 1 to 60, from 1 to 50, from 5 to 60, from 5 to 55, from 10 to 50, from 15 to 45, from 20 to 40, from 25 to 35, or from 30 to 35, parts by weight per 100 parts by weight of the system.

The inorganic filler may be chosen to level out substrate irregularities. The inorganic filler may be white or grey in color and may have a low refractive index such that the inorganic filler may not have pigment character. The inorganic filler may be chosen to give the composition and coating filling power. The inorganic filler may form a solid structure in the wet composition/coating. The inorganic filler may be chosen to partially substitute for the pigment and/or to influence properties such as gloss, grindability, adhesion, and elasticity.

### Properties of the System:

The system is not limited to any particular physical or chemical properties. In various embodiments, the system may have one or more of the properties described below or may have different properties altogether.

In various embodiments, the system has a pot life of at least or up to 2, 3, 4, 6, 8, 10, 12, 14, 16, 18, 20, 22, or 24 hours. In other embodiments, the system has a pot life of 4 to 6, 4 to 8, 6 to 8, 4 to 10, 4 to 12, 6 to 10, 6 to 12, 2 to 4, or 6 to 8, hours, or any number or range of hours between the aforementioned number of hours and up to 24 hours. Increased pot-life tends to allow for better control over, and customization of, properties of the system and the eventual film/coating. Moreover, increased pot-life tends to increase production efficiencies, increase flexibility, and reduce manufacturing times. Pot-Life is typically determined using BYK-Gardner DIN 4mm viscosity cups conform to the flow characteristics specified by Deutsche Normen DIN 53211. ASTM D1200 can also be used.

In other embodiments, the system has a viscosity of from 40 cps to 4,000 mPa.s, from 10 cps to 4,000 mPa.s, from 500 cps to 4,000 mPa.s, or from 1000 cps to 4000 mPa.s as determined using ASTM D5146 - 10.

The in various embodiments, the system includes less than about 100 parts by weight of (residual) toluene diisocyanate per one million parts by weight of the system. In various embodiments, the system includes less than 95, 90, 85, 80, 75, 70, 65, 60, 55, 50, 45, 40, 35, 30, 25, 20, 15, 10, or 5, parts by weight of (residual) toluene diisocyanate per one million parts by weight of the system. Similarly, the coating itself may independently include less than 95, 90, 85, 80, 75, 70, 65, 60, 55, 50, 45, 40, 35, 30, 25, 20, 15, 10, or 5, parts by weight of (residual) toluene diisocyanate per one million parts by weight of the coating. In further embodiments, the system or coating may include even less of the residual toluene diisocyanate, e.g. less than 95, 90, 85, 80, 75, 70, 65, 60, 55, 50, 45, 40, 35, 30, 25, 20, 15, 10, 5, 4, 3, 2, 1, 0.5, 0.1, 0.05, or 0.01, parts by weight of (residual) toluene diisocyanate per one million parts by weight of the system or coating, respectively. The terminology "residual" typically describes an amount of toluene diisocyanate left over/remaining from the original synthesis used to form a polycarbodiimide reactant that is used to form the instant polycarbodiimide of the system, as is described in greater detail below.

### Method of Forming the System:

This disclosure also provides a method of forming the system. The method includes the steps of providing the polycarbodiimide, providing the reactive compound, and providing the water. Each step of providing may independently be described as supplying or otherwise making each of these components available for formation of the system. Each component may be provided independently or with one or more other components.

The method also includes the step of combining the polycarbodiimide, the reactive compound, and the water, to form the system. Typically, the components are added to a reactor followed by addition of water. This mixture is typically solubilized (homogenized) via mechanical mixing.

The polycarbodiimide itself used in the instant system may be formed by any method in the art. For example, the polycarbodiimide of the system may be defined as the reaction product of a polycarbodiimide reactant and an alcohol. In other words, a first carbodiimide can be formed, e.g. from toluene diisocyanate, and reacted with the alcohol to form the instant polycarbodiimide of the system that eventually reacts with the reactive compound. Said differently, the polycarbodiimide that reacts with the reactive compound, as described above, is different from the "polycarbodiimide reactant" described here. In still other words, the polycarbodiimide reactant may be described as a first polycarbodiimide and the polycarbodiimide of the system may be described as a second polycarbodiimide.

An isocyanate, e.g. toluene diisocyanate or any isomers thereof, may be used to the form the polycarbodiimide reactant. The isocyanate may be reacted (with itself) in the presence an appropriate catalyst known in the art, using heating (e.g. at 110°C) until an NCO content drops, e.g. to 8 to 15%, 10 to 12%, etc. At this stage, solvent can be added. This typically forms the polycarbodiimide reactant.

The carbodiimidization catalyst may be any type of carbodiimidization catalyst known to those skilled in the art for producing a polycarbodiimide. Generally, the carbodiimidization catalyst is selected from the group of tertiary amides, basic metal compounds, carboxylic acid metal salts and/or non-basic organo-metallic compounds. In certain embodiments, the carbodiimidization catalyst comprises a phosphorus compound.

Specific examples of phosphorus compounds suitable for the purposes of the carbodiimidization catalyst include, but are not limited to, phospholene oxides such as 3-methyl-l-phenyl-2-phospholene oxide, 1-phenyl-2-phospholen-1-oxide, 3-methy-1-2-phospholen-1-oxide, 1-ethy1-2-phospholen-1-oxide, 3-methyl-1-phenyl-2-phospholen-loxide, and 3-phospholene isomers thereof. A particularly suitable phospholene oxide is 3-methyl-1-phenyl-2-phospholene oxide.

Additional examples of phosphorous compounds suitable for the purposes of the carbodiimidization catalyst include, but are not limited to, phosphates, diaza- and oxaza phospholenes and phosphorinanes. Specific examples of such phosphorous compounds include, but are not limited to, phosphate esters and other phosphates such as trimethyl phosphate, triethyl phosphate, tributyl phosphate, tri-2-ethylhexyl phosphate, tributoxyethyl phosphate, trioleyl phosphate, triphenyl phosphate, tricresyl phosphate, trixylenyl phosphate, cresyl diphenyl phosphate, xylenyl diphenyl phosphate, 2- ethylhexyldiphenyl phosphate, and the like; acidic phosphates such as methyl acid phosphate, ethyl acid phosphate, isopropyl acid phosphate, butyl acid phosphate, 2- ethylhexyl acid phosphate, isodecyl acid phosphate, lauryl acid phosphate, isotridecylacid phosphate, myristyl acid phosphate, isostearyl acid phosphate, oleyl acid phosphate, and the like; tertiary phosphites such as triphenyl phosphite, tri(p-cresyl) phosphite, tris(nonylphenyl) phosphite, triisooctyl phosphite, diphenyisodecyl phosphite, phenyldiisodecyl phosphite, triisodecyl phosphite, tristearyl phosphite, trioleyl phosphite, and the like; secondary phosphites such as di-2-ethylhexyl hydrogen phosphite, dilauryl hydrogen phosphite, dioleyl hydrogen phosphite, and the like; and phosphine oxides, such as triethylphosphine oxide, tributylphosphine oxide, triphenylphosphine oxide, tris(chloromethyl)phosphine oxide, tris(chloromethyl)phosphine oxide, and the like. Carbodiimidization catalysts comprising phosphate esters and methods for their preparation are described in U.S. Pat. No. 3,056,835, which is hereby incorporated by reference in its entirety, in various non-limiting embodiments.

Yet further examples the carbodiimidization catalyst include, but are not limited to, 1-phenyl-3-methyl phospholene oxide, 1-benzyl-3-methyl phospholene oxide, 1-ethyl-3-methyl phospholene oxide, 1-phenyl-3-methyl phospholene dichloride, 1-benzyl-3-methyl phospholene dichloride, 1-ethyl-3-methyl phospholene dichloride, 1-phenyl-3-methyl phospholene sulphide, 1-phenyl-3-methyl phospholene sulphide, 1-benzyl-3-methyl phospholene sulphide, 1-ethyl-3-methyl phospholene sulphide, 1-phenyl-1-phenylimino-3-methyl phospholene oxide, 1-benzyl-1-phenylimino-3-methyl phospholene oxide 1-ethyl-1-phenylimino-3-methyl phospholene oxide, 1-phenyl phospholidine, 1-benzyl phospholidine, 1-ethyl phospholidine, and 1-phenyl-3-methyl phospholene oxide.

The carbodiimidization catalyst may alternatively comprise diaza- and oxazaphospholenes and phosphorinanes. Diaza- and oxaza- phospholenes and phosphorinanes and methods for their preparation are described in U.S. Pat. No. 3,522,303, which is hereby incorporated by reference in its entirety in various non-limiting embodiments. Specific diaza- and oxaza- phospholenes and phosphorinanes include, but are not limited to, 2-ethyl-1,3-dimethyl-1,3,2-diazaphospholane-2-oxide; 2-chloromethyl-1,3-dimethyl-1,3,2-diazaphospholane-2-oxide; 2-trichloromethyl-1,3-dimethyl-1,3,2-diazaphospholane-2-oxide; 2-phenyl-1,3-dimethyl-1,3,2-diazaphospholane-2-oxide; 2-phenyl-1,3-dimethyl-1,3,2-diazaphosphorinane-2-oxide; 2-benzyl-1,3-dimethyl-1,3,2-diazaphospholane-2-oxide; 2-allyl-1,3-dimethyl-1,3,2-diazaphospholane-2-oxide; 2-bromomethyl- 1,3-dimethyl- 1,3,2-diazaphospholane-2-oxide; 2-cyclohexyl-1,3-dimethyl-1,3,2-diazaphospholane-2-oxide; 2-cyclohexyl-1,3-dimethyl-1,3,2-diaphospholane-2-oxide; 2-(2-ethoxyethyl1,3-dimethyl-1,3,2-diazaphospholane-2-oxide; and 2-naphthyl-1,3-dimethyl-1,3,2-diazaphospholane-2-oxide, triethyl phosphate, hexamethyl phosphoramide, and the like.

The carbodiimidization catalyst may comprise a triaryl arsine. Triaryl arsines and methods for their preparation are described in U.S. Pat. No. 3,406,198, which is hereby incorporated by reference in its entirety in various non-limiting embodiments. Specific examples of triaryl arsines include, but are not limited to, triphenylarsine, tris(p-tolyl)arsine, tris(p-methoxyphenyl) arsine, tris(p-ethoxyphenyl)arsine, tris(p-chlorophenyl)arsine, tris(p-fluorophenyl) arsine, tris(2,5-xylyl)arsine, tris(p-cyanophenyl)arsine, tris(naphthyl)arsine, tris(p-methylmercaptophenyl)arsine, tris(p-biphenylyl)arsine, p-chlorophenyl bis(p-tolyl)arsine, phenyl(p-chlorophenyl)(p-bromophenyl)arsine, and the like. Additional arsine compounds are described in U.S. Patent No. 4,143,063, which is hereby incorporated by reference in its entirety, in various non-limiting embodiments. Specific examples of such arsine compounds include, but are not limited to, triphenylarsine oxide, triethylarsine oxide, polymer bound arsine oxide, and the like. Further, the carbodiimidization catalyst may comprise metallic derivatives of acetylacetone. Metallic derivatives of acetylacetone and methods are described in U.S. Pat. No. 3,152,131, which is hereby incorporated by reference in its entirety in various non-limiting embodiments. Specific examples of metallic derivatives of acetylacetone include, but are not limited to, metallic derivatives of acetylacetone such as the beryllium, aluminum, zirconium, chromium, and iron derivatives. Additional examples of the carbodiimidization catalyst include metal complexes derived from a d-group transition element and π-bonding ligand selected from the group consisting of carbon monoxide, nitric oxide, hydrocarbylisocyanides, trihydrocarbylphosphine, trihydrocarbylarsine, trihydrocarbylstilbine, and dihydrocarbylsulfide wherein hydrocarbyl in each instance contains from 1 to 12 carbon atoms, inclusive, provided that at least one of the π-bonding ligands in the complex is carbon monoxide or hydrocarbylisocyanide. Such metal complexes and methods for preparation are described in U.S. Pat. No. 3,406,197, which is hereby incorporated by reference in its entirety in various non-limiting embodiments. Specific examples of metal complexes include, but are not limited to, iron pentacarbonyl, di-iron pentacarbonyl, tungsten hexacarbonyl, molybdenum hexacarbonyl, chromium hexacarbonyl, dimanganese decacarbonyl, nickel tetracarbonyl, ruthenium pentacarbonyl, the complex of iron tetracarbonyl:methylisocyanide, and the like.

The carbodiimidization catalyst may comprise organotin compounds. Specific examples of organotin compounds include, but are not limited to, dibutyltin dilaurate, dibutyltin diacetate, dibutyltin di(2-ethylhexanoate), dioctyltin dilaurate, dibutyltin maleate, di(n-octyl)tin maleate, bis(dibutylacetoxytin) oxide, bis(dibutyllauroyloxytin) oxide, dibutyltin dibutoxide, dibutyltin dimethoxide, dibutyltin disalicilate, dibutyltin bis(isooctylmaleate), dibutyltin bis(isopropylmaleate), dibutyltin oxide, tributyltin acetate, tributyltin isopropyl succinate, tributyltin linoleate, tributyltin nicotinate, dimethyltin dilaurate, dimethyltin oxide, diotyltin oxide, bis(tributyltin) oxide, diphenyltin oxide, triphenyltin acetate, tri-n-propyltin acetate, tri-n-propyltin laurate and bis(tri-n-propyltin) oxide, dibutyltin dilauryl mercaptide, dibutyltin bis(isooctylmercaptoacetate), bis(triphenyltin)oxide, stannous oxalate, stannous oleate, stannous naphthenate, stannous acetate, stannous butyrate, stannous 2-ethylhexanoate, stannous laurate, stannous palmitate, stannous stearate, and the like. Typical organotin compounds include, but are not limited to, stannous oxalate, stannous oleate and stannous 2-ethylhexanoate, dibutyltin diacetate, dibutyltin dilaurate, dibutyltin dilaurylmercaptide, dibutyltin bis(isooctylmercaptoacetate), dibutyltin oxide, bis(triphenyltin) oxide, and bis(tri-n-butyltin) oxide. Further, the carbodiimidization catalyst may comprise various organic and metal carbene complexes, titanium(IV) complexes, copper(I) and/or copper(II) complexes.

After formation of the first polycarbodiimide/polycarbodiimide reactant, alcohol can be added and reacted with the polycarbodiimide reactant to form the second polycarbodiimide/polycarbodiimide of the system.

The alcohol may be, for example, methoxypoly(ethylene glycol), abbreviated mPEG. Alternatively, the alcohol may be 2-ethylhexanol, C1-C20 straight and/or branched alcohols methoxypropylamine, amine terminated methoxypoly(ethylene/propylene glycol), or combinations thereof. The reaction may take place as shown generically below: 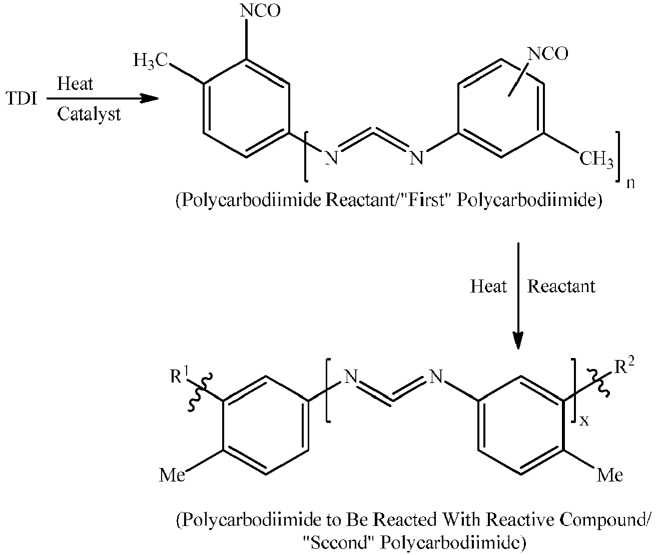 Room temperature and/or heat or both may be used. A urethane forming catalyst may also be used.

Alternatively, the method may include the step of forming the first polycarbodiimide, then adding 2-ethylhexanol to form an intermediate, and then adding MPEG, to form the final product which is the second polycarbodiimide that is to be reacted with the reactive compound. In an alternative embodiment, the method may include the step of forming the first polycarbodiimide and then adding 2-ethylhexanol and MPEG, to form the final product which is the second polycarbodiimide that is to be reacted with the reactive compound. In still other embodiments, the method may include the step of forming the first polycarbodiimide and then adding trimethylolpropane (TMP) and MPEG, to form the final product which is the second polycarbodiimide that is to be reacted with the reactive compound. Alternatively, the method may include the step of forming the first polycarbodiimide, then adding trimethylolpropane (TMP) to form an intermediate and then adding the MPEG to the intermediate to form the final product which is the second polycarbodiimide that is to be reacted with the reactive compound. In another embodiment, the method may include the step of forming the first polycarbodiimide, then adding MPEG to form an intermediate, and then adding 2-ethylhexanol, to form the final product which is the second polycarbodiimide that is to be reacted with the reactive compound.

### Film/Coating:

This disclosure also provides the coating itself. In the absence of a substrate, the coating can be described independently as a film. Accordingly, in various embodiments, the terminology "film" and "coating" may be interchangeable as set forth below.

The film is may be, for example, a poly-isourea film, a poly-n-acyl urea film, a poly-guanidine film, or a poly-isothiourea film, as is understood in the art. The film/coating includes or is the reaction product of the second polycarbodiimide/polycarbodiimide of the system and the reactive compound. The polycarbodiimide and the reactive compound react in the presence of the water. Reaction speed may be controlled by catalyzing the reaction by using Lewis bases and/or by manipulating thermal energy of the system. It is also contemplated that the film may be alternatively described as including isourea moieties, n-acyl urea moieties, guanidine moieties, and/or isothiourea moieties, in addition to other compounds/moieties. In various embodiments, the following reaction, or reaction type, may be utilized: 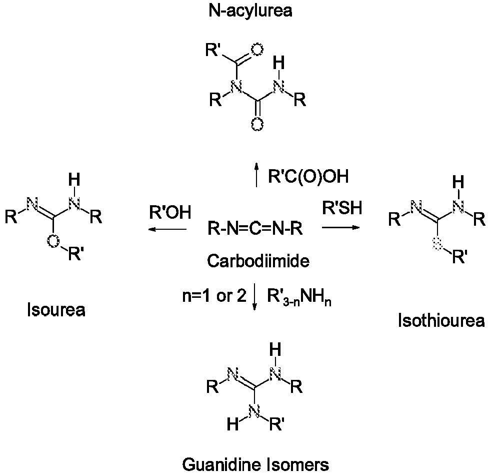 wherein each of R and R' may independently be any organic group described herein or any alkyl or aromatic group having 1 to 20 carbon atoms.

The film/coating is not particularly limited to any size, shape, or thickness and may be formed to specifications as determined by one of skill in the art. In various embodiments, the film/coating has a thickness of from 25 to 200, from 50 to 175, from 75 to 150, from 100 to 125, or from 125 to 150, microns, or any value or range of values therebetween. In other embodiments, the film/coating has a gloss of 90 to 100 measured at a 60 degree angle. Gloss (+/- 2) % can be measured from an angle of 60 degrees using a BYK Gardner Multigloss meter in accordance with either ASTM D2457 or ASTM D523. In further embodiments, the film/coating has a pendulum hardness of from 70-95 as determined using a 100µm wet film on glass, at 23 ± 2°C, and at 56 ± 5% relative humidity, using ASTM D4366. In still other embodiments, the film/coating has a pencil hardness of F-H using a 100µm wet film on glass, at 23 ± 2°C, and at 56 ± 5% relative humidity, using ASTM D-3363-05. Moreover, the film/coating may have a chemical resistance of MEK double rubs above 100 or 200, as determined using ASTM D5402 or A7835. In various non-limiting embodiments, all values and ranges of values between the aforementioned values are hereby expressly contemplated.

In various non-limiting embodiments, the coating exhibits corrosion resistance of 2 to 10, 3 to 9, 4 to 8, 5 to 7, 5 to 6, or, 2, 3, 4, 5, 6, 7, 8, 9, or 10, as determined using ASTM B117 and ASTM D-1654-08 on a substrate that is unpolished cold rolled steel, aluminum, or galvanized steel. In various embodiments, the coating exhibits adhesion of 3 to 5, 3 to 4, 4 to 5, 3, 4, or 5, as determined using ASTM D3359 Method B on a substrate that is unpolished cold rolled steel, aluminum, or galvanized steel. In other embodiments, the coating exhibits humidity resistance of 5 to 10, 6 to 9, 7 to 8, 5, 6, 7, 8, 9, or 10, as determined using ASTM D2247 on a substrate that is unpolished cold rolled steel, aluminum, or galvanized steel. In still other embodiments, the coating exhibits blistering resistance of 5 to 10, 6 to 9, 7 to 8, 5, 6, 7, 8, 9, or 10, as determined using water immersion and ASTM D-714-02 on a substrate that is unpolished cold rolled steel, aluminum, or galvanized steel. In still other embodiments, the coating exhibits a dE color change (also known as delta e) of less than 2.0, 1.9, 1.8, 1.7, 1.6, 1.5, 1.4, 1.3, 1.2, 1.1, 1.05, 1.0, 0.9, 0.8, 0.7, etc., as determined using the Cie76 algorithm. More specifically, the calculation is as follows: ΔE^{∗}_{ab} = √((L^{∗}₂-L^{∗}₁)² + (a^{∗}₂-a^{∗}₁)² + (b^{∗}₂-b^{∗}₁)²). In various embodiments, the progress of the reaction can be monitored by the decreased intensity of -N=C=N- vibration at 2100 cm⁻¹ with time. These properties may vary based on reactants, reaction conditions, substrates, etc.

### Method of Forming the Film/Coating:

This disclosure also provides a method of forming the film/coating. The method includes the steps of providing the polycarbodiimide, providing the reactive compound, providing the water, and reacting the polycarbodiimide and the reactive compound in the presence of the water, to form the film/coating. Each step of providing may independently be described as supplying or otherwise making each of these components available for formation of the system. Each component may be provided independently or with one or more other components.

### Article:

This disclosure also provides an article including a substrate and the film/coating disposed on the substrate, e.g. by spraying, pouring, brushing, coating, etc. The film/coating may be disposed on and in direct contact with the substrate or on and spaced apart from the substrate. For example, the film/coating may be disposed on the substrate such that there is no layer in between the film/coating and the substrate. Alternatively, the film/coating may be disposed "on" the substrate and yet there may be an intermediate layer disposed between the film/coating and the substrate. In this non-limiting embodiment, the film/coating may still be described as being "disposed on" the substrate. The substrate is not particularly limited and may be any known in the art such as wood, metal, plastic, glass, a polymer, etc. In various embodiments, the article is further defined as furniture, wood flooring, wood trim, joinery (e.g. the wooden components of a building, such as stairs, doors, and door and window frames, viewed collectively), etc.

### Automobile Component:

This disclosure also provides an automobile component including the substrate and the coating disposed on the substrate. In various embodiments, the coating includes or is the reaction product of the polycarbodiimide and the reactive compound, which are reacted in the presence of the water.

The substrate may be any described above. In various embodiments, the substrate is coated or uncoated, treated or untreated, and combinations of these. In various embodiments, the substrate is chosen from plastic, metals such as steel, iron, and aluminum, and combinations thereof. In other embodiments, the substrate is unpolished cold rolled steel, aluminum, or galvanized steel. The automobile component may be a door, hood, roof, panel, etc., and the like. The automobile component may include steel and/or extruded materials. In one embodiment, the automotive component is further defined as an automotive body panel.

The coating may be disposed on and in direct contact with the substrate. In other embodiments, the substrate may include a basecoat layer disposed on the coating and a topcoat layer disposed on the basecoat layer sandwiching said basecoat layer between the coating and the topcoat layer. The coating may be disposed on and in direct contact with the substrate while the basecoat layer may be disposed on and in direct contact with the coating, while the topcoat layer may be disposed on and in direct contact with the basecoat layer. The basecoat layer and the topcoat layer may be any known in the art.

### Method of Forming the Automobile Component:

This disclosure also provides a method of forming the automobile component. In various embodiments, the method includes the step of providing the system, providing the substrate, and applying the system on the substrate. The system may be applied on or to the substrate via any method known in the art, including, but not limited to, brushing, spray coating, dip coating, roll coating, curtain coating, electrostatic spraying, and combinations thereof. The method may include the step of curing the system to form the coating and/or of reacting the polycarbodiimide and the reactive compound in the presence of the water to form the coating on the substrate. Alternatively, the polycarbodiimide may react with the reactive compound upon combination with no explicit independent step taken in the method.

The method may also include the step of drawing down the system on the automobile component, of heating the automobile component, of applying radiation to the automobile component, of drying the automobile component, and/or of installing the automobile component including the coating on an automobile chassis.

### EXAMPLES

A series of polycarbodiimides is formed according to this disclosure as set forth in the Table below.

Procedure A: Polycarbodiimide 1 is formed by charging a reactor with 500 grams of Lupranate T80, (T80), 1.50 grams Triphenylphosphite, and 250 grams of n-butyl acetate. Agitation is started and the contents of the reactor are heated to 80°C. 2 grams of phospholine oxide (as 5% solution of MPPO in toluene) is added when the contents reach 75°C. The contents are heated at 80°C for 8 hours and 40 minutes. Subsequently, the materials are stored overnight at room temperature. At this stage, a first polycarbodiimide is formed, but this polycarbodiimide is not Polycarbodiimide 1 of this Example.

Then, the contents are heated to 60°C and 0.60 grams of DABCO 33LV are added and the contents are stirred for 15 minutes. Then, 440.87 grams of MPEG 550 are added and the temperature is maintained between 60°C and 65°C for 3 hours to form Polycarbodiimide 1.

Polycarbodiimide 2 and Polycarbodiimide 3 are formed using the procedure A of Polycarbodiimide 1.

Procedure B: Polycarbodiimide 4 is formed by charging a glass reactor with 73.98 grams of phenylisocyanate capped Lupranate T80 polycarbodiimide, 125.92 grams of MPEG 350, and 0.10 grams of DABCO 33LV. Agitation is started and the contents of the reactor are heated to 110°C. The contents of the reacted at this temperature for 2 hours to form Polycarbodiimide 4. Polycarbodiimide 5, Polycarbodiimide 6 and Polycarbodiimide 7 are formed using the procedure B of Polycarbodiimide 4 with components listed in the Table.

| Ex. | Lupranate T80 g | TPP g | nBuOAc g | MPPO (5% MPPO in Toluene) g | DABCO 33LV g | MPEG 550 g | 2-Ethyl-1-hexanol g | % NCN |
|---|---|---|---|---|---|---|---|---|
| 1 | 500.00 | 1.50 | 250.00 | 2.00 | 0.60 | 440.87 | --- | 6.40 |
| 2 | 500.00 | 1.50 | 250.00 | 2.00 | 0.70 | 100.40 | 100.40 | 7.97 |
| 3 | 500.00 | 1.50 | 250.00 | 2.00 | 0.70 | 31.11 | 93.33 | 8.97 |

| Ex. | Phenylisocyanate Capped Lupranate T80 Polycarbodiimide g | MPEG 350 g | MPEG 550 g | DABCO T9 g | % NCN |
|---|---|---|---|---|---|
| 4 | 73.98 | 125.92 | --- | 0.10 | NA |
| 5A | 85.54 | --- | 114.36 | 0.10 | Gel |
| 5 | 54.40 | --- | 145.50 | 0.10 | 1.12 |
| 6 | 61.06 | --- | 138.84 | 0.10 | 1.94 |
| 7 | 73.09 | --- | 126.90 | 0.10 | 3.41 |

Examples 1-3 are formed using Procedure A. Examples 4-7 are formed using Procedure B.

### Formation of System:

A series of aqueous systems is also formed in accordance with this disclosure. Examples 4, -5, -6, and -7 dissolve in deionized water to give a clear solution and are not studied further with reactive substance for coatings, Examples 1, -2, and -3, when added to water, provide dispersions in deionized water and one of the system, Example 2, is studied for coating suitability. When Example 2 is combined with a reactive compound, such as a polyol, and water, an aqueous system is formed.

### Coating:

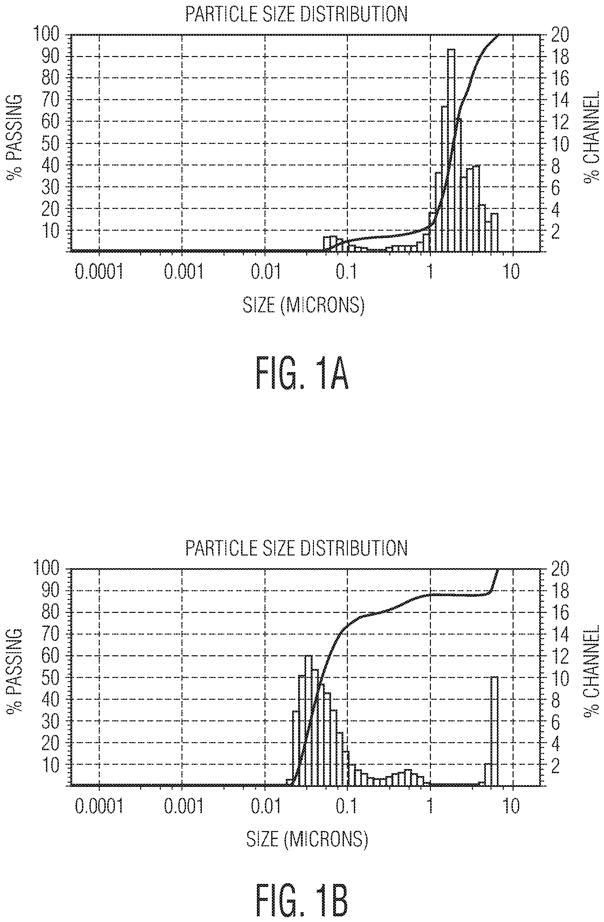

A coating is also formed in accordance with this disclosure as follows. Each of the following are mixed in a glass bottle and mixed on a Vortex mixer: 6.5 grams of Example 2, 0.1 grams of UL-28 tin catalyst, 0.5 grams of non-ionic surfactant aromatic alcohol ethoxylate, and 8.6 grams of water, to form an aqueous dispersion. The aqueous dispersion is then monitored for particle size (see left) >1u, as shown in Figure 1A. 2 grams of polyether polyol (OH # 398) are then added to the aqueous dispersion. Upon polyol addition and after vortex mixing the particle size drops to <0.1u, as shown in Figure 1B.

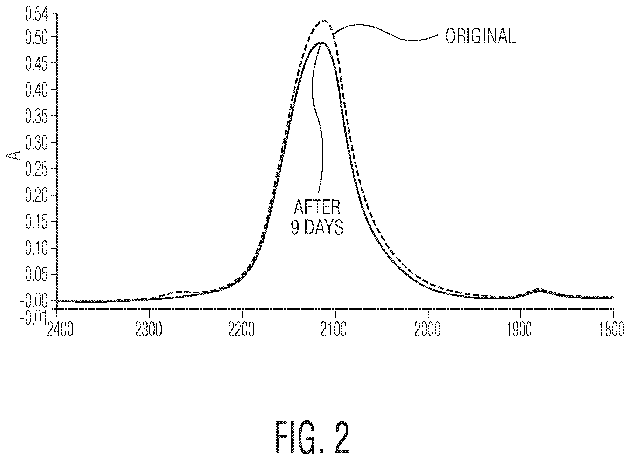

The sample is then coated on a phosphate treated CRS plate by a draw down bar. The sample is then dried at RT and baked at 100°C for one hour to achieve the following physical properties: Koenig Hardness: 150 - 160 sec (as determined using ASTM D4366); MEK Double Rubs: 245 (as determined using ASTM D4752); and Adhesion: 5 (as determined using ASTM D3359 - 09e2). In addition, a sample of the aqueous dispersion of the polycarbodiimide (prior to addition of polyol) is monitored for 9 days at room temperature, via FT-IR, to evaluate stability of the NCN, as shown in Figure 2.

A relatively higher vapor pressure of TDI (toluene diisocyanate, T80) typically prevents TDI from being used in newer applications as compared to MDI. A new technology described herein, based on polycarbodiimides {(-N=C=N)ₙ-}, has been developed by the reaction of TDI with 3-methyl-1-phenyl-2-phospholene-1-oxide (MPPO) catalyst that can be dispersed in water. Moreover, the polycarbodiimide formed is essentially free of isocyanate monomer and will be in compliance with proposed regulatory restrictions (EPA SNUR). The aqueous polycarbodiimide coatings will relieve environmental burden posed by solvent borne coatings. With a wide range of reactive functionality available to react with aqueous polycarbodiimide, many coating properties (physical, mechanical and chemical) can be met.

All combinations of the aforementioned embodiments throughout the entire disclosure are hereby expressly contemplated in one or more non-limiting embodiments even if such a disclosure is not described verbatim in a single paragraph or section above. In other words, an expressly contemplated embodiment may include any one or more elements described above selected and combined from any portion of the disclosure.

One or more of the values described above may vary by ± 5%, ± 10%, ± 15%, ± 20%, ± 25%, etc. so long as the variance remains within the scope of the disclosure. Unexpected results may be obtained from each member of a Markush group independent from all other members. Each member may be relied upon individually and or in combination and provides adequate support for specific embodiments within the scope of the appended claims. The subject matter of all combinations of independent and dependent claims, both singly and multiply dependent, is herein expressly contemplated. The disclosure is illustrative including words of description rather than of limitation. Many modifications and variations of the present disclosure are possible in light of the above teachings, and the disclosure may be practiced otherwise than as specifically described herein.

It is also to be understood that any ranges and subranges relied upon in describing various embodiments of the present disclosure independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present disclosure, and such ranges and subranges may be further delineated into relevant halves, thirds, quarters, fifths, and so on. As just one example, a range "of from 0.1 to 0.9" may be further delineated into a lower third, i.e. from 0.1 to 0.3, a middle third, i.e. from 0.4 to 0.6, and an upper third, i.e. from 0.7 to 0.9, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments within the scope of the appended claims. Finally, an individual number within a disclosed range may be relied upon and provides adequate support for specific embodiments within the scope of the appended claims. For example, a range "of from 1 to 9" includes various individual integers, such as 3, as well as individual numbers including a decimal point (or fraction), such as 4.1, which may be relied upon and provide adequate support for specific embodiments within the scope of the appended claims.

## Claims

1. An aqueous system for forming a coating on a substrate, said aqueous system comprising:
A. a polycarbodiimide having the structure: 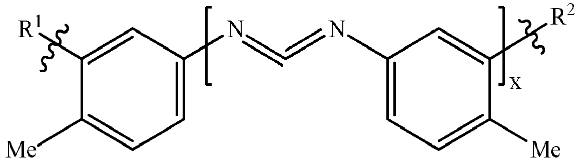 wherein each of R¹ and R² is independently chosen from 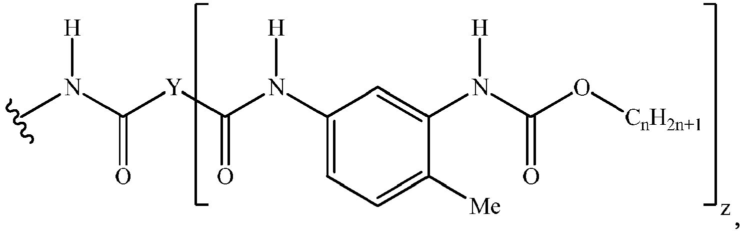 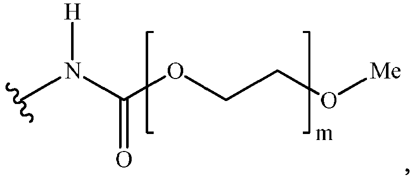 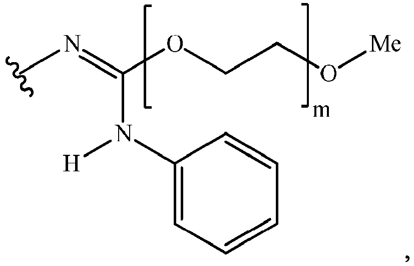 and 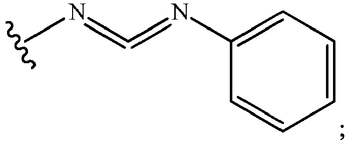
wherein each n is independently a number from 1 to 20;
wherein each m is independently a number from 1 to 100;
wherein each Y is independently an alkoxy or polyalkoxy group having (w) oxygen atoms, wherein each w is independently at least 1;
wherein each z is independently a number from 0 to (w-1); and
wherein x, Y, and a total of said CₙH₂ₙ₊₁ groups are present in a ratio of from (4 to 5):(0 to 1.5):(0 to 4.5), respectively,
B. a reactive compound having at least two reactive groups that react with said polycarbodiimide, wherein each reactive group is independently chosen from -OH, -NHR³, - NH₂, -COOH, and -SH, and combinations thereof,
wherein R³ is an alkyl group or aromatic group having 1 to 20 carbon atoms; and
C. water.

2. The aqueous system of claim 1 wherein at least one of R¹ and R² is

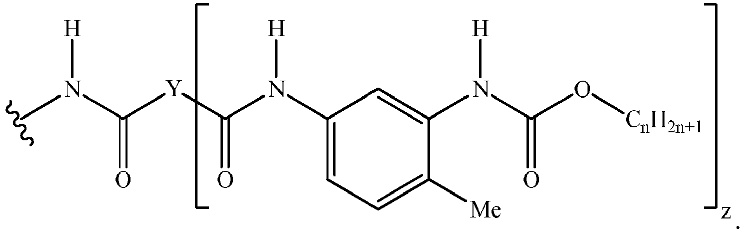

3. The aqueous system of claim 1 wherein at least one of R¹ and R² is

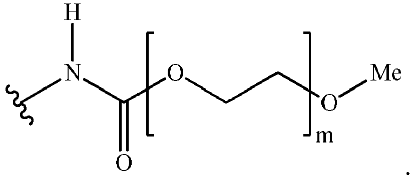

4. The aqueous system of claim 1 wherein at least one of R¹ and R² is

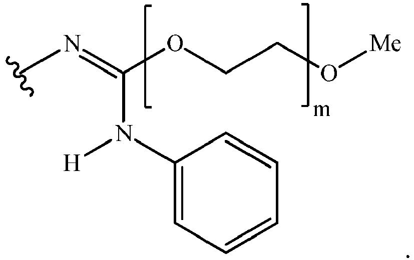

5. The aqueous system of claim 1 wherein at least one of R¹ and R² is

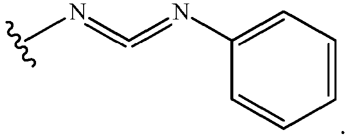

6. The aqueous system of any one of claims 1-5 wherein at least two reactive groups of said reactive compound are -OH.

7. The aqueous system of claim 6 wherein said coating is further defined as a poly-iso-urea coating.

8. The aqueous system of any one of claims 1-5 wherein at least two reactive groups of said reactive compound are -NHR³.

9. The aqueous system of claim 8 wherein said coating is further defined as a poly-guanidine coating

10. The aqueous system of any one of claims 1-5 wherein at least two reactive groups of said reactive compound are -NH₂.

11. The aqueous system of claim 10 wherein said coating is further defined as a poly-guanidine coating

12. The aqueous system of any one of claims 1-5 wherein at least two reactive groups of said reactive compound are -COOH.

13. The aqueous system of claim 12 wherein said coating is further defined as a poly-n-acryl urea coating.

14. The aqueous system of any one of claims 1-5 wherein at least two reactive groups of said reactive compound are -SH.

15. The aqueous system of claim 14 wherein said coating is further defined as a poly-iso-thio urea coating.

16. A coating formed from the aqueous system of any one of claims 1-15.

17. The coating of claim 16 having s Koenig Hardness of from 150 to 160 seconds, as determined using ASTM D4366, an MEK Double Rubs of 245, as determined using ASTM D4752, and an Adhesion of 5, as determined using ASTM D3359 - 09e2, each independently ± 10%.

18. An article comprising a substrate and a coating disposed on said substrate, wherein said coating is the reaction product of a polycarbodiimide and a reactive compound that react in the presence of water,
wherein said polycarbodiimide has the structure: 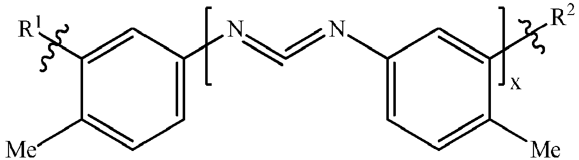 wherein each of R¹ and R² is independently chosen from 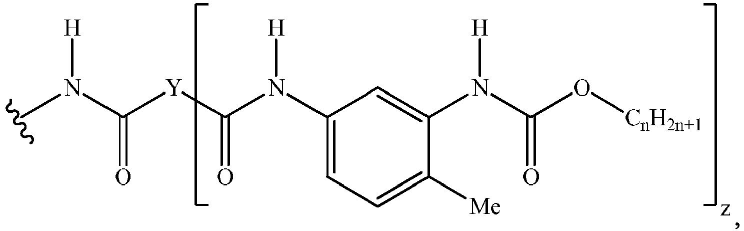 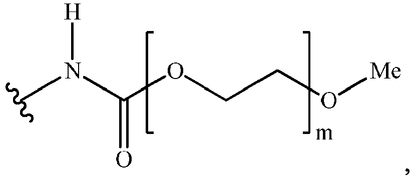 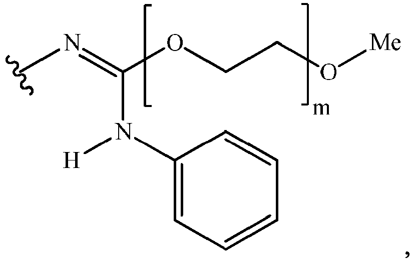 and 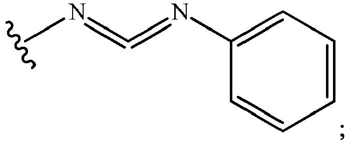
wherein each n is independently a number from 1 to 20;
wherein each m is independently a number from 1 to 100;
wherein each Y is independently an alkoxy or polyalkoxy group having (w) oxygen atoms, wherein each w is independently at least 1;
wherein each z is independently a number from 0 to (w-1); and
wherein x, Y, and a total of said CₙH₂ₙ₊₁ groups are present in a ratio of from (4 to 5):(0 to 1.5):(0 to 4.5), respectively, and
wherein said reactive compound has at least two reactive groups that react with said polycarbodiimide, wherein each reactive group is independently chosen from -OH, -NHR³, - NH₂, -COOH, and -SH, and wherein R³ is an alkyl group or aromatic group having 1 to 20 carbon atoms.

19. A method of forming a coating on a substrate, said method comprising the steps of:
A. providing an aqueous system comprising;
a polycarbodiimide having the structure, 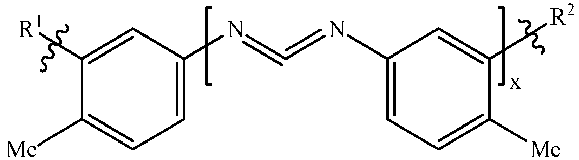 wherein each of R¹ and R² is independently chosen from 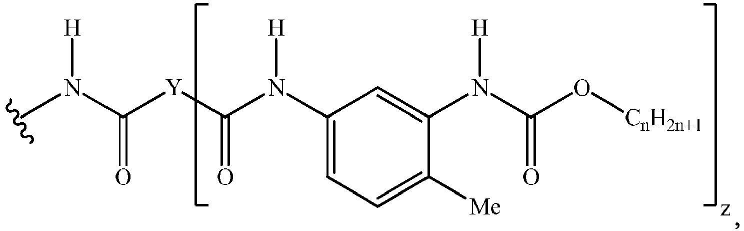 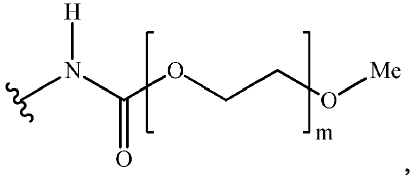 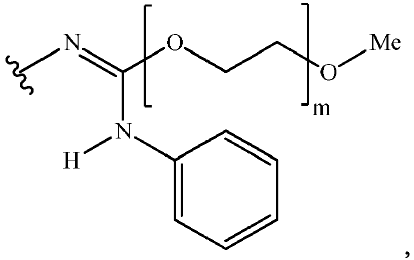 and 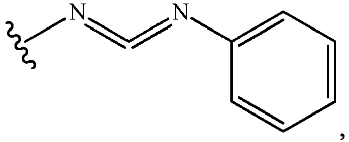
wherein each n is independently a number from 1 to 20,
wherein each m is independently a number from 1 to 100,
wherein each Y is independently an alkoxy or polyalkoxy group having (w) oxygen atoms, wherein each w is independently at least 1,
wherein each z is independently a number from 0 to (w-1), and
wherein x, Y, and a total of said CₙH₂ₙ₊₁ groups are present in a ratio of from (4 to 5):(0 to 1.5):(0 to 4.5), respectively,
a reactive compound having at least two reactive groups that react with said polycarbodiimide, wherein each reactive group is independently chosen from -OH, -NHR³, - NH₂, -COOH, and -SH, wherein R³ is an alkyl group or aromatic group having 1 to 20 carbon atoms, and
water,
B. applying the aqueous system to the substrate; and
C. reacting the polycarbodiimide and the reactive compound in the presence of the water on the substrate to form the coating.

20. A method of forming an aqueous system comprising (A) a polycarbodiimide having the structure: 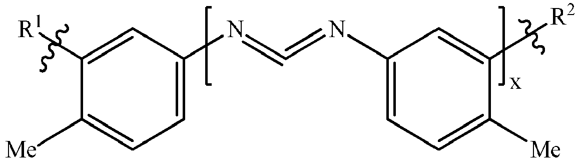 wherein each of R¹ and R² is independently chosen from 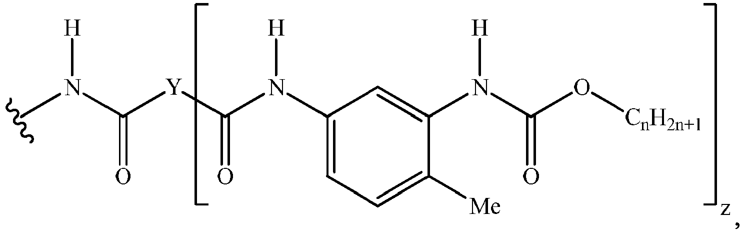 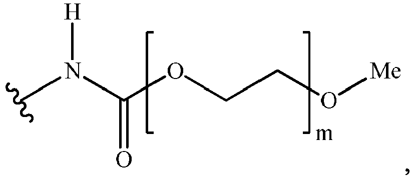 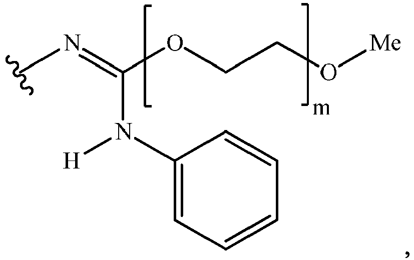 and 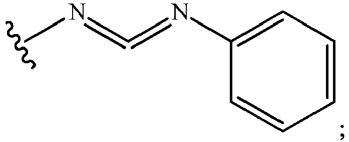
wherein each n is independently a number from 1 to 20;
wherein each m is independently a number from 1 to 100;
wherein each Y is independently an alkoxy or polyalkoxy group having (w) oxygen atoms, wherein each w is independently at least 1;
wherein each z is independently a number from 0 to (w-1); and
wherein x, Y, and a total of said CₙH₂ₙ₊₁ groups are present in a ratio of from (4 to 5):(0 to 1.5):(0 to 4.5), respectively,
(B) a reactive compound having at least two reactive groups that react with said polycarbodiimide, wherein each reactive group is independently chosen from -OH, -NHR³, - NH₂, -COOH, and -SH, wherein R³ is an alkyl group or aromatic group having 1 to 20 carbon atoms; and (C) water, said method comprising the steps of:
I. polymerizing toluene diisocyanate to form a first polycarbodiimide;
II. reacting the first polycarbodiimide with an alcohol to form the polycarbodiimide having the structure: 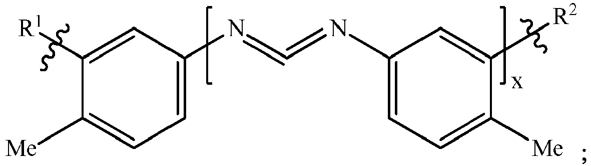 and
III. combining the polycarbodiimide formed in Step II with the reactive compound to form the aqueous system.

## Patentansprüche

1. Wässriges System zur Bildung einer Beschichtung auf einem Substrat, wobei das wässrige System Folgendes umfasst:
A. ein Polycarbodiimid mit der Struktur: 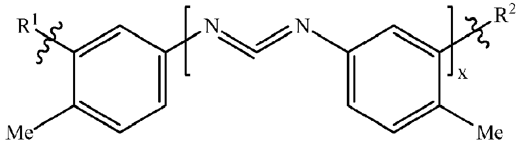 wobei R¹ und R² jeweils unabhängig aus 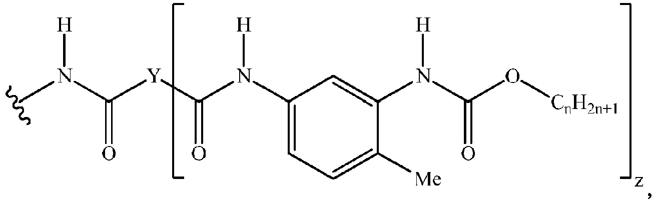 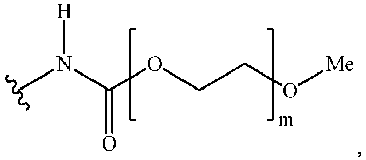 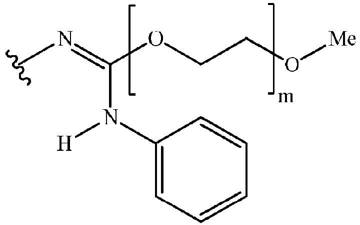 und 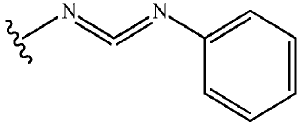 ausgewählt sind;
wobei n jeweils unabhängig für eine Zahl von 1 bis 20 steht;
wobei m jeweils unabhängig für eine Zahl von 1 bis 100 steht;
wobei Y jeweils unabhängig für eine Alkoxy- oder Polyalkoxygruppe mit (w) Sauerstoffatom steht,
wobei w jeweils unabhängig für mindestens 1 steht;
wobei z jeweils unabhängig für eine Zahl von 0 bis (w-1) steht und
wobei x, Y und die Summe der CₙH₂ₙ₊₁-Gruppen in einem Verhältnis von (4 bis 5) : (0 bis 1,5) : (0 bis 4,5) vorliegen,
B. eine reaktive Verbindung mit mindestens zwei reaktiven Gruppen, die mit dem Polycarbodiimid reagieren, wobei jede reaktive Gruppe unabhängig aus -OH, -NHR³, -NH₂, -COOH und -SH und Kombinationen davon ausgewählt ist,
wobei R³ für eine Alkylgruppe oder aromatische Gruppe mit 1 bis 20 Kohlenstoffatomen steht; und
C. Wasser.

2. Wässriges System nach Anspruch 1, wobei mindestens eines von R¹ und R² für 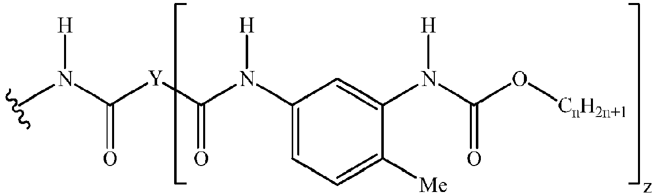 steht.

3. Wässriges System nach Anspruch 1, wobei mindestens eines von R¹ und R² für 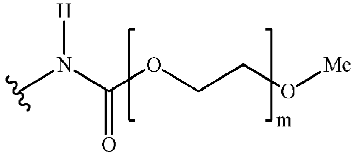 steht.

4. Wässriges System nach Anspruch 1, wobei mindestens eines von R¹ und R² für 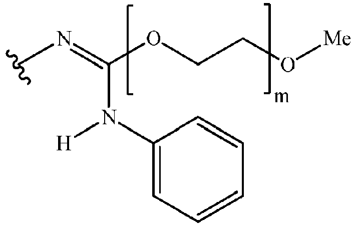 steht.

5. Wässriges System nach Anspruch 1, wobei mindestens eines von R¹ und R² für 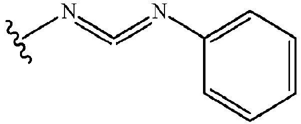 steht.

6. Wässriges System nach einem der Ansprüche 1-5, wobei es sich bei mindestens zwei reaktiven Gruppen der reaktiven Verbindung um -OH handelt.

7. Wässriges System nach Anspruch 6, wobei die Beschichtung ferner als eine Polyisoharnstoff-Beschichtung definiert ist.

8. Wässriges System nach einem der Ansprüche 1-5, wobei es sich bei mindestens zwei reaktiven Gruppen der reaktiven Verbindung um -NHR³ handelt.

9. Wässriges System nach Anspruch 8, wobei die Beschichtung ferner als eine Polyguanidin-Beschichtung definiert ist.

10. Wässriges System nach einem der Ansprüche 1-5, wobei es sich bei mindestens zwei reaktiven Gruppen der reaktiven Verbindung um -NH₂ handelt.

11. Wässriges System nach Anspruch 10, wobei die Beschichtung ferner als eine Polyguanidin-Beschichtung definiert ist.

12. Wässriges System nach einem der Ansprüche 1-5, wobei es sich bei mindestens zwei reaktiven Gruppen der reaktiven Verbindung um -COOH handelt.

13. Wässriges System nach Anspruch 12, wobei die Beschichtung ferner als eine Poly-n-acrylharnstoff-Beschichtung definiert ist.

14. Wässriges System nach einem der Ansprüche 1-5, wobei es sich bei mindestens zwei reaktiven Gruppen der reaktiven Verbindung um -SH handelt.

15. Wässriges System nach Anspruch 14, wobei die Beschichtung ferner als eine Polyisothioharnstoff-Beschichtung definiert ist.

16. Beschichtung, gebildet aus dem wässrigen System nach einem der Ansprüche 1-15.

17. Beschichtung nach Anspruch 16 mit einer König-Härte von 150 bis 160 Sekunden gemäß Bestimmung nach ASTM D4366, einem Wert für MEK-Doppelhübe von 245 gemäß Bestimmung nach ASTM D4752 und einer Haftung von 5 gemäß Bestimmung nach ASTM D3359-09e2, jeweils unabhängig ±10 %.

18. Artikel, umfassend ein Substrat und eine darauf aufgebrachte Beschichtung, wobei es sich bei der Beschichtung um das Reaktionsprodukt eines Polycarbodiimids und einer reaktiven Verbindung, die in Gegenwart von Wasser reagieren, handelt, wobei das Polycarbodiimid die folgende Struktur aufweist: 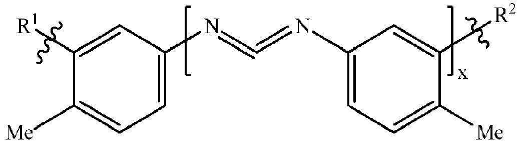 wobei R¹ und R² jeweils unabhängig aus 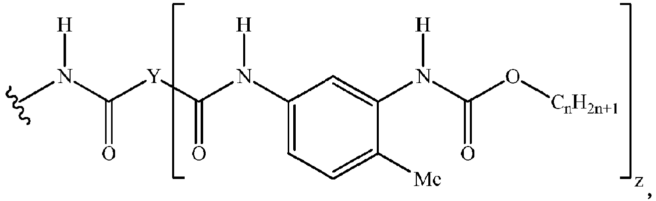 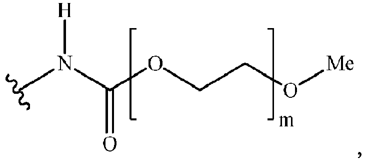 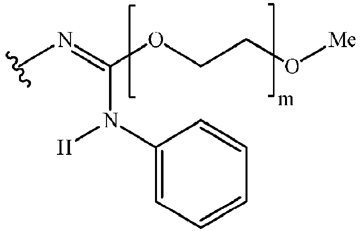 und 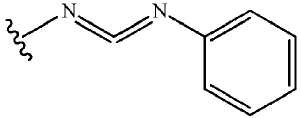 ausgewählt sind;
wobei n jeweils unabhängig für eine Zahl von 1 bis 20 steht;
wobei m jeweils unabhängig für eine Zahl von 1 bis 100 steht;
wobei Y jeweils unabhängig für eine Alkoxy- oder Polyalkoxygruppe mit (w) Sauerstoffatom steht,
wobei w jeweils unabhängig für mindestens 1 steht;
wobei z jeweils unabhängig für eine Zahl von 0 bis (w-1) steht und
wobei x, Y und die Summe der CₙH₂ₙ₊₁-Gruppen in einem Verhältnis von (4 bis 5) : (0 bis 1,5) : (0 bis 4,5) vorliegen, und
wobei die reaktive Verbindung mindestens zwei reaktive Gruppen aufweist, die mit dem Polycarbodiimid reagieren, wobei jede reaktive Gruppe unabhängig aus -OH, -NHR³, -NH₂, -COOH und -SH ausgewählt ist und wobei R³ für eine Alkylgruppe oder aromatische Gruppe mit 1 bis 20 Kohlenstoffatomen steht.

19. Verfahren zur Bildung einer Beschichtung auf einem Substrat, wobei das Verfahren die folgenden Schritte umfasst:
A. Bereitstellen eines wässrigen Systems, umfassend
ein Polycarbodiimid mit der Struktur: 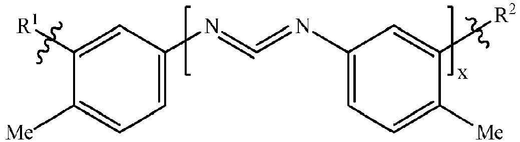 wobei R¹ und R² jeweils unabhängig aus 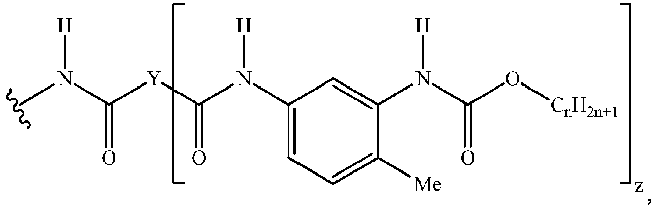 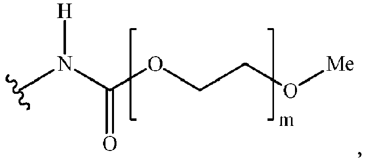 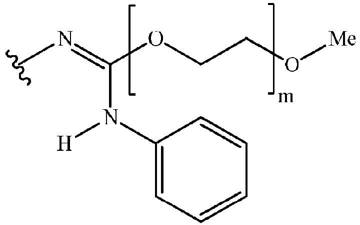 und 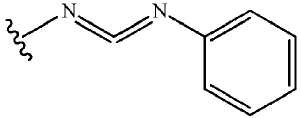 ausgewählt sind;
wobei n jeweils unabhängig für eine Zahl von 1 bis 20 steht;
wobei m jeweils unabhängig für eine Zahl von 1 bis 100 steht;
wobei Y jeweils unabhängig für eine Alkoxy- oder Polyalkoxygruppe mit (w) Sauerstoffatom steht,
wobei w jeweils unabhängig für mindestens 1 steht;
wobei z jeweils unabhängig für eine Zahl von 0 bis (w-1) steht und
wobei x, Y und die Summe der CₙH₂ₙ₊₁-Gruppen in einem Verhältnis von (4 bis 5) : (0 bis 1,5) : (0 bis 4,5) vorliegen,
eine reaktive Verbindung mit mindestens zwei reaktiven Gruppen, die mit dem Polycarbodiimid reagieren, wobei jede reaktive Gruppe unabhängig aus -OH, -NHR³, -NH₂, -COOH und -SH ausgewählt ist,
wobei R³ für eine Alkylgruppe oder aromatische Gruppe mit 1 bis 20 Kohlenstoffatomen steht, und Wasser,
B. Aufbringen des wässrigen Systems auf das Substrat und
C. Umsetzen des Polycarbodiimids und der reaktiven Verbindungen in Gegenwart von Wasser auf dem Substrat zur Bildung der Beschichtung.

20. Verfahren zum Bilden eines wässrigen Systems, umfassend (A) ein Polycarbodiimid mit der Struktur: 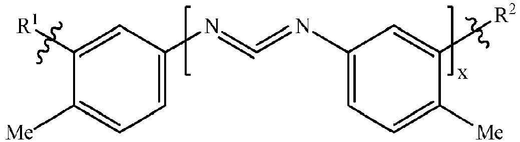 wobei R¹ und R² jeweils unabhängig aus 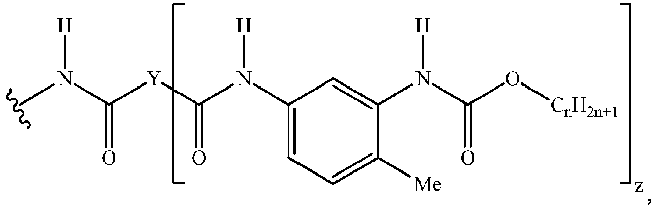 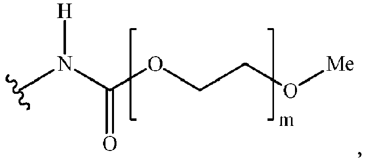 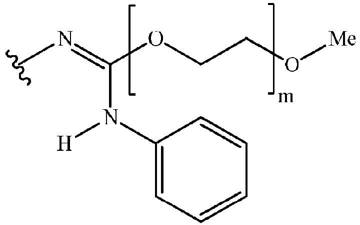 und 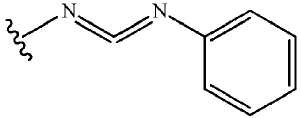 ausgewählt ist;
wobei n jeweils unabhängig für eine Zahl von 1 bis 20 steht;
wobei m jeweils unabhängig für eine Zahl von 1 bis 100 steht;
wobei Y jeweils unabhängig für eine Alkoxy- oder Polyalkoxygruppe mit (w) Sauerstoffatom steht,
wobei w jeweils unabhängig für mindestens 1 steht;
wobei z jeweils unabhängig für eine Zahl von 0 bis (w-1) steht und
wobei x, Y und die Summe der CₙH₂ₙ₊₁-Gruppen in einem Verhältnis von (4 bis 5) : (0 bis 1,5) : (0 bis 4,5) vorliegen,
(B) eine reaktive Verbindung mit mindestens zwei reaktiven Gruppen, die mit dem Polycarbodiimid reagieren, wobei jede reaktive Gruppe unabhängig aus -OH, -NHR³, -NH₂, -COOH und -SH ausgewählt ist, wobei R³ für eine Alkylgruppe oder aromatische Gruppe mit 1 bis 20 Kohlenstoffatomen steht; und
(C) Wasser, wobei das Verfahren die folgenden Schritte umfasst:
I. Polymerisieren von Toluoldiisocyanat zur Bildung eines ersten Polycarbodiimids;
II. Umsetzen des ersten Polycarbodiimids mit einem Alkohol zur Bildung des Polycarbodiimids mit der Struktur: 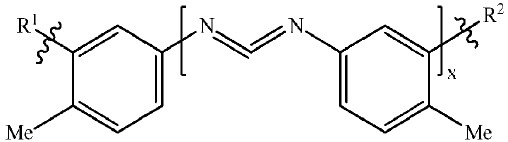 und
III. Kombinieren des in Schritt II gebildeten Polycarbodiimids mit der reaktiven Verbindung zur Bildung des wässrigen Systems.

## Revendications

1. Système aqueux pour la formation d'un revêtement sur un substrat, ledit système aqueux comprenant :
A. un polycarbodiimide possédant la structure : 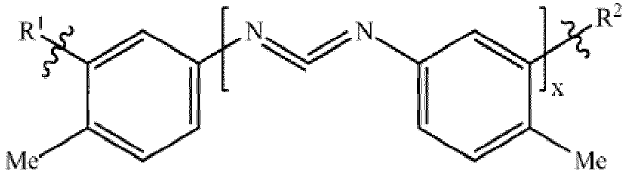 chacun parmi R¹ et R² étant indépendamment choisi parmi 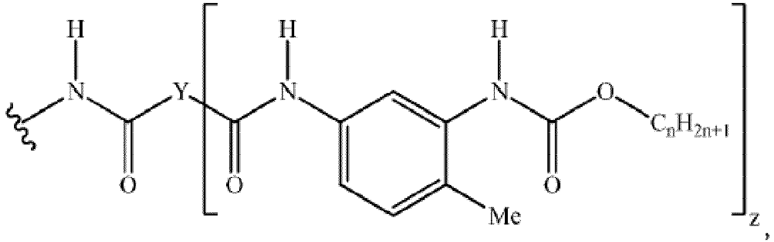 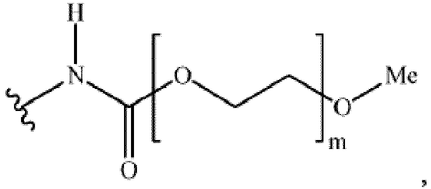 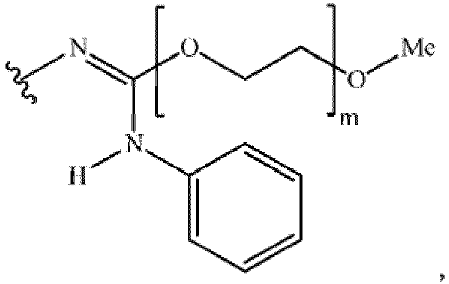 et 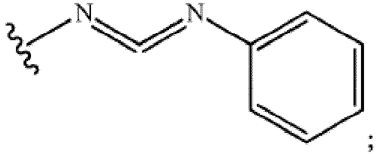
chaque n étant indépendamment un nombre de 1 à 20 ;
chaque m étant indépendamment un nombre de 1 à 100 ;
chaque Y étant indépendamment un groupe alcoxy ou polyalcoxy possédant (w) atomes d'oxygène, chaque w étant indépendamment au moins 1 ;
chaque z étant indépendamment un nombre de 0 à (w - 1) ; et
x, Y, et un total desdits groupes CₙH₂ₙ₊₁ étant présents en un rapport allant de, respectivement, (4 à 5) : (0 à 1,5) : (0 à 4,5),
B. un composé réactif possédant au moins deux groupes réactifs qui réagissent avec ledit polycarbodiimide, chaque groupe réactif étant indépendamment choisi parmi -OH, -NHR³, -NH₂, - COOH, et -SH, et des combinaisons correspondantes,
R³ étant un groupe alkyle ou un groupe aromatique possédant 1 à 20 atomes de carbone ; et
C. de l'eau.

2. Système aqueux selon la revendication 1, au moins l'un parmi R¹ et R² étant

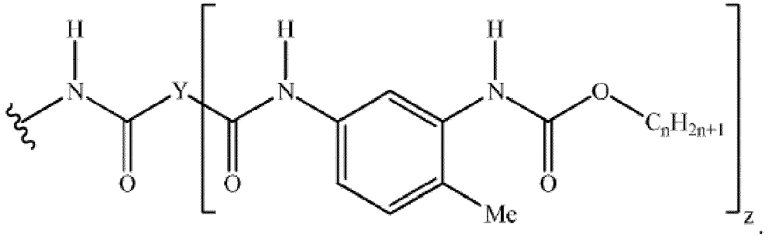

3. Système aqueux selon la revendication 1, au moins l'un parmi R¹ et R² étant

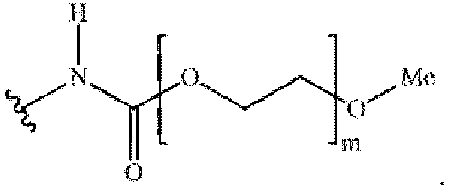

4. Système aqueux selon la revendication 1, au moins l'un parmi R¹ et R² étant

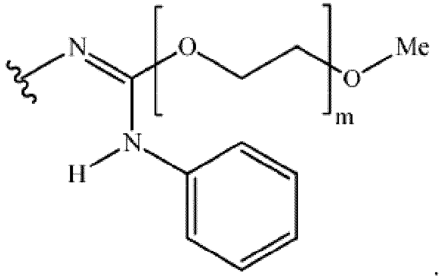

5. Système aqueux selon la revendication 1, au moins l'un parmi R¹ et R² étant

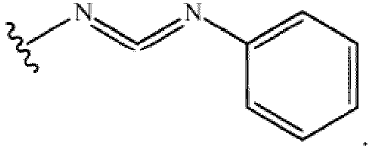

6. Système aqueux selon l'une quelconque des revendications 1 à 5, au moins deux groupes réactifs dudit composé réactif étant -OH.

7. Système aqueux selon la revendication 6, ledit revêtement étant en outre défini comme un revêtement de type poly-iso-urée.

8. Système aqueux selon l'une quelconque des revendications 1 à 5, au moins deux groupes réactifs dudit composé réactif étant -NHR³.

9. Système aqueux selon la revendication 8, ledit revêtement étant en outre défini comme un revêtement de type poly-guanidine.

10. Système aqueux selon l'une quelconque des revendications 1 à 5, au moins deux groupes réactifs dudit composé réactif étant -NH₂.

11. Système aqueux selon la revendication 10, ledit revêtement étant en outre défini comme un revêtement de type poly-guanidine.

12. Système aqueux selon l'une quelconque des revendications 1 à 5, au moins deux groupes réactifs dudit composé réactif étant -COOH.

13. Système aqueux selon la revendication 12, ledit revêtement étant en outre défini comme un revêtement de type poly-n-acrylurée.

14. Système aqueux selon l'une quelconque des revendications 1 à 5, au moins deux groupes réactifs dudit composé réactif étant -SH.

15. Système aqueux selon la revendication 14, ledit revêtement étant en outre défini comme un revêtement de type poly-iso-thiourée.

16. Revêtement formé à partir du système aqueux selon l'une quelconque des revendications 1 à 15.

17. Revêtement selon la revendication 16 possédant une dureté Koenig allant de 150 à 160 secondes, telle que déterminée à l'aide de la norme ASTM D4366, un double frottement à la MEK de 245, tel que déterminé à l'aide de la norme ASTM D4752, et une adhérence de 5, telle que déterminée à l'aide de la norme ASTM D3359-09e2, chacun(e) indépendamment ± 10 %.

18. Article comprenant un substrat et un revêtement déposé sur ledit substrat, ledit revêtement étant le produit de réaction d'un polycarbodiimide et d'un composé réactif qui réagit en présence d'eau, ledit polycarbodiimide possédant la structure : 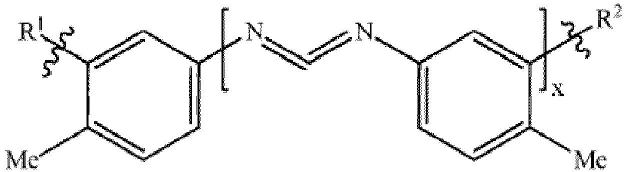 chacun parmi chacun parmi R¹ et R² étant indépendamment choisi parmi 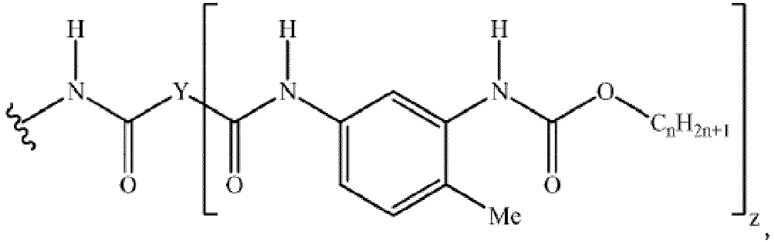 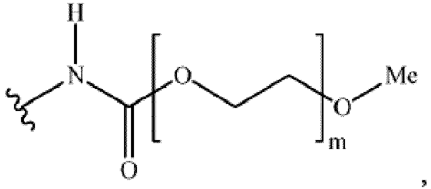 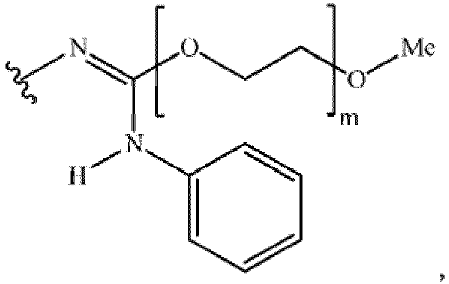 et 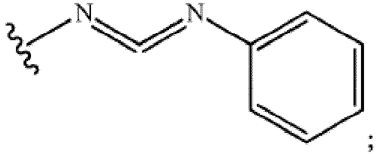
chaque n étant indépendamment un nombre de 1 à 20 ;
chaque m étant indépendamment un nombre de 1 à 100 ;
chaque Y étant indépendamment un groupe alcoxy ou polyalcoxy possédant (w) atomes d'oxygène, chaque w étant indépendamment au moins 1 ;
chaque z étant indépendamment un nombre de 0 à (w - 1) ; et
x, Y, et un total desdits groupes CₙH₂ₙ₊₁ étant présents en un rapport allant de, respectivement, (4 à 5) : (0 à 1,5) : (0 à 4, 5), et
ledit composé réactif possédant au moins deux groupes réactifs qui réagissent avec ledit polycarbodiimide, chaque groupe réactif étant indépendamment choisi parmi -OH, -NHR³, -NH₂, - COOH, et -SH, et R³ étant un groupe alkyle ou un groupe aromatique possédant 1 à 20 atomes de carbone.

19. Procédé de formation d'un revêtement sur un substrat, ledit procédé comprenant les étapes de :
A. la mise à disposition d'un système aqueux comprenant :
un polycarbodiimide possédant la structure : 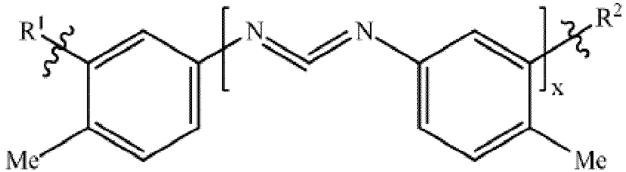 chacun parmi R¹ et R² étant indépendamment choisi parmi 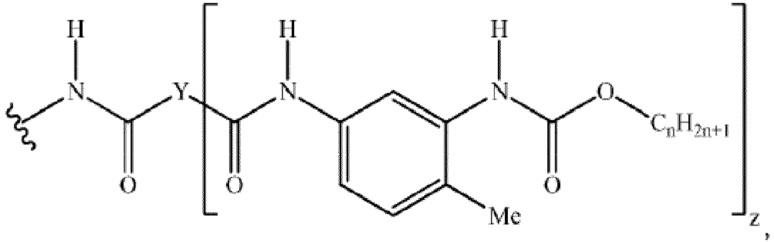 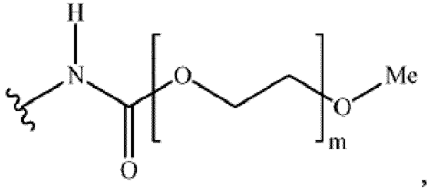 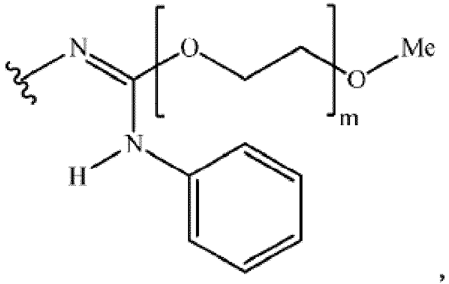 et 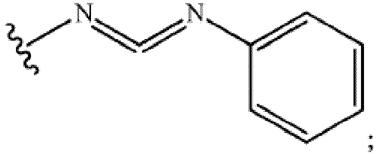
chaque n étant indépendamment un nombre de 1 à 20 ;
chaque m étant indépendamment un nombre de 1 à 100 ;
chaque Y étant indépendamment un groupe alcoxy ou polyalcoxy possédant (w) atomes d'oxygène, chaque w étant indépendamment au moins 1 ;
chaque z étant indépendamment un nombre de 0 à (w - 1) ; et
x, Y, et un total desdits groupes CₙH₂ₙ₊₁ étant présents en un rapport allant de, respectivement, (4 à 5) : (0 à 1,5) : (0 à 4,5),
un composé réactif possédant au moins deux groupes réactifs qui réagissent avec ledit polycarbodiimide, chaque groupe réactif étant indépendamment choisi parmi -OH, -NHR³, -NH₂, - COOH, et -SH, R³ étant un groupe alkyle ou un groupe aromatique possédant 1 à 20 atomes de carbone, et
de l'eau,
B. l'application du système aqueux au substrat ; et
C. la mise en réaction du polycarbodiimide et du composé réactif en présence de l'eau sur le substrat pour former le revêtement.

20. Procédé de formation d'un système aqueux comprenant (A) un polycarbodiimide possédant la structure : 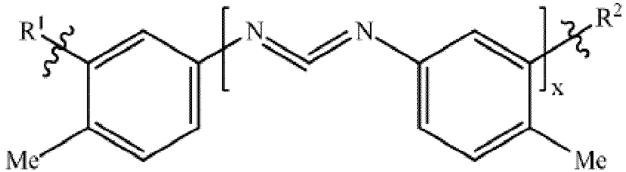 chacun parmi R¹ et R² étant indépendamment choisi parmi 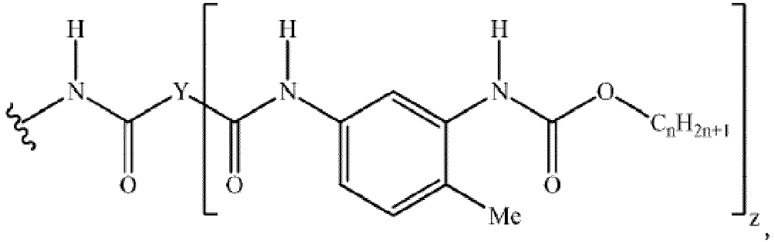 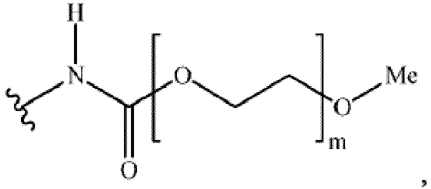 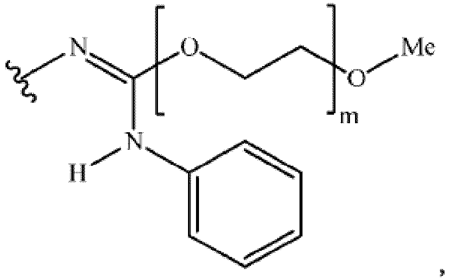 et 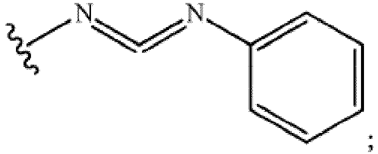
chaque n étant indépendamment un nombre de 1 à 20 ;
chaque m étant indépendamment un nombre de 1 à 100 ;
chaque Y étant indépendamment un groupe alcoxy ou polyalcoxy possédant (w) atomes d'oxygène, chaque w étant indépendamment au moins 1 ;
chaque z étant indépendamment un nombre de 0 à (w - 1) ; et
x, Y, et un total desdits groupes CₙH₂ₙ₊₁ étant présents en un rapport allant de, respectivement, (4 à 5) : (0 à 1,5) : (0 à 4,5),
(B) un composé réactif possédant au moins deux groupes réactifs qui réagissent avec ledit polycarbodiimide, chaque groupe réactif étant indépendamment choisi parmi -OH, -NHR³, -NH₂, - COOH, et -SH, R³ étant un groupe alkyle ou un groupe aromatique possédant 1 à 20 atomes de carbone ; et (C) de l'eau, ledit procédé comprenant les étapes de :
I. polymérisation de diisocyanate de toluène pour former un premier polycarbodiimide ;
II. mise en réaction du premier polycarbodiimide avec un alcool pour former le polycarbodiimide possédant la structure : 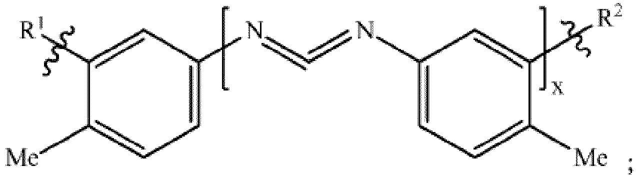 et
III. combinaison du polycarbodiimide formé dans l'étape II avec le composé réactif pour former le système aqueux.
